# EUROPEAN PATENT APPLICATION

(11) **EP 2 343 631 A1**
(43) Date of publication of application: **13.07.2011**
(21) Application number: 09840597.0
(22) Date of filing: 27.09.2009
(51) Int. Cl.: G06F 3/041

(54) **TOUCH CONTROL DISPLAY**

(71) Applicant: Inferpoint Systems Limited, Road Town, Tortola (VG); Inferpoint Systems (Shenzhen) Limited, Shenzhen, Guangdong 518052 (CN)
(72) Inventor: CHEN, Qiliang, Guangdong 518052 (CN); LIU, Haiping, Guangdong 518052 (CN); LI, Dehai, Guangdong 518052 (CN)
(74) Representative: Moore, Graeme Patrick
(86) International application number: PCT/CN2009/074264
(87) International publication number: WO 2011/035489

(57) **Abstract**

A touch display is provided, which includes a flat panel display (FPD), a display driving circuit, a touch control circuit, and a display/touch signal gate circuit or display/touch signal loading circuit. The touch control circuit has a touch excitation source and a touch signal detection circuit. Row electrode groups and column electrode groups are disposed on a substrate of the display screen, and the touch control circuit applies a touch signal to a certain electrode line in the row electrode group or the column electrode group and detects change of the touch signal on the electrode line, so as to detect whether the electrode is touched. The touch control circuit samples the touch signal on a certain electrode line in a period of one display frame or a multiple of one display frame, and performs data sampling on the touch signal according to a fixed synchronous relation with the touch signal applied to the electrode line, in which the fixed synchronous relation refers to that every moment of obtaining the sampling data locates at the same specific phase point of the signal wave of the touch excitation source.

## Description

### BACKGROUND OF THE INVENTION

### Field of Invention

The present invention relates to a touch screen and a flat panel display (FPD), and more particularly, to a touch display.

### Related Art

Touch screens have been developed to be widely applied in various fields such as personal computer, intelligent phone, public information, intelligent house appliance, and industrial control. In the current field of touch screen, resistive touch screens, photoelectric touch screens, ultrasonic touch screens, and flat capacitive touch screens dominate the market, and in recent years, projective capacitive touch screens are developing rapidly. However, the touch screens all have their own technical defects, and therefore, they can hardly be popularized in common displays though they have been widely applied in some special situations.

The display and the touch screen are twins, and in the conventional art, the display and the touch screen are responsible for displaying and performing touch control respectively. Currently, the separate FPD having touch function includes a display, a display driver, a touch screen, a touch signal detector, a backlight source, and the like. The touch screen may be a resistive touch screen, a capacitive touch screen, a magnetic touch screen, a ultrasonic touch screen, or a photoelectric touch screen each applying different sensing principles, and the display may be a passive liquid crystal display (TN/STN-LCD), an active LCD (TFT-LCD), an organic light-emitting diode display (OLED, AM-OLED), a plasma display panel (PDP), a nanotube display, or an e-paper. In the FPD having a touch screen, the separated touch screen and the display are overlapped, a planar position of a touched point is detected by the touch screen, and a cursor on the display is made to be positioned with the touched point. The overlapping of the touch screen and the display increases the thickness, weight, and cost of the touch screen FPD, and when the touch screen is disposed in front of the display, reflection generated by sensing electrodes of the touch screen results in non-uniform display and reduced display contrast under strong ambient light, thus affecting the displaying effect. It is a target that the touch panel and the display are integrated such that the FPD having touch function becomes thinner and lighter.

Therefore, it is necessary to find a solution to solve the above problem of complicated structure, to increase the reliability of the FPD having touch function, to improve the displaying effect, compress the thickness, reduce the cost, and to realize the FPD in a simple way.

China Patent Applications No. 2006100948141, entitled "Touch Screen Flat Panel Display," and No. 2006101065583, entitled "Flat Panel Display Having Touch Function," respectively disclose a connection mode of a touch detection circuit and electrodes of a display screen, in which the electrodes of the display screen are enabled to transmit display driving signals as well as transmit and sense touch signals through an analog switch or a loading circuit, display driving and touch detection time-division multiplex or simultaneously share the electrodes of the display screen, such that the electrodes of the display screen are used for the display driving as well as the touch detection, thus creatively providing the concept of "touch screen flat panel display".

China Patent Applications No. 2009102035358, entitled "Driving Implementation of Touch Screen Flat Panel Display," No. 2009101399060, entitled "Driving Implementation of Touch Screen Flat Panel Display," and No 200810133417X, entitled "Touch Screen Flat Panel Display" have made further improvements on the touch screen flat panel display.

The touch screen FPDs disclosed in the above china patents have the following basic working principles. Two groups of intersected electrodes on the display screen are taken as touch sensing electrodes, each electrode line of the electrode group is connected to a touch excitation source, and the touch excitation source applies an alternating current (AC) or direct current (DC) touch excitation signal to the electrode lines. When a finger of a human or another touch object approaches or contacts with an electrode line, a touch circuit detects magnitudes of changes of the touch signal of different electrode lines, and thus the position of the finger or another touch object on the display screen is found. This is a novel touch detection technique that integrating displaying and touch control, and has an obvious cost advantage and a broad development prospect after improvement. The present invention is an improvement on touch signal detection sequence.

### SUMMARY OF THE INVENTION

The present invention is directed to provide a touch display, so as to solve the problem of sequence selection when detecting touch signals on electrode lines of a display screen.

Therefore, the present invention provides a touch display, which includes a flat panel display (FPD), a display driving circuit, a touch control circuit, and a display/touch signal gate output circuit or a display/touch signal loading circuit enabling the electrodes of the display screen to be used for display driving as well as touch detection. The touch control circuit has a touch excitation source and a touch signal detection circuit. The display/touch signal gate output circuit enables the electrodes of the display screen to be communicated with the display driving circuit so as to transmit display driving signals or to be communicated with the touch control circuit so as to transmit touch signals, and the display driving and the touch detection time-division multiplex the electrodes of the display screen. The display/touch signal loading circuit enables the electrodes of the display screen to transmit display driving signals and touch signals at the same time, and the display driving and the touch detection simultaneously share the electrodes of the display screen. Row electrode groups and column electrode groups are disposed on a substrate of the display screen, and the touch control circuit applies a touch signal to a certain electrode line in the row electrode group or the column electrode group and detects change of the touch signal on the electrode line, so as to detect whether the electrode is touched. The touch control circuit samples the touch signal on a certain electrode line in a period of one display frame or a multiple of one display frame, and performs data sampling on the touch signal according to a fixed synchronous relation with the touch signal applied to the electrode line, in which the fixed synchronous relation refers to that every moment of obtaining the sampling data locates at the same specific phase point of the signal wave of the touch excitation source.

Further, in preferred embodiments of the present invention, the touch control circuit performing data sampling on the touch signal in a fixed synchronous relation refers to that the touch control circuit performs data sampling in a period of fixed sequence starting from the touch signal applied on the electrode line.

The touch control circuit sampling on the specific phase point refers to that when the wave of the touch signal applied on the electrode line is a square wave of another step wave, in a certain charge/discharge period that the touch signal applied on the electrode line charges a touch capacitor of a touch object, the touch control circuit samples the touch signal at a fixed moment in the time period from starting charging to finishing charging; or that the touch control circuit samples the touch signal at a fixed moment in the time period from starting discharging to finishing discharging in a certain charge/discharge period.

The touch control circuit performing data sampling on the touch signal in a fixed synchronous relation refers to that the touch control circuit performs data sampling in a certain number of periods or time slots after the period of fixed sequence starting from the touch signal applied on the electrode line.

The touch control circuit performing data sampling on the touch signal refers to performing sampling on accumulative data or average data in a certain number of periods or time slots.

When the touch control circuit performs data sampling on the touch signal, at least one of a voltage signal and a current signal is sampled.

When the touch control circuit performs data sampling on the touch signal, at least one of an amplitude feature and a time feature of the signal is sampled.

The time feature of the sampled signal refers to a phase shift feature of the touch signal on the electrode line under fixed time coordinates.

The phase shift feature takes a phase of the touch signal on a signal output end of the touch excitation source as a comparison object.

As compared with the conventional art, the present invention has the following advantages.

When it intends to detect the touch action, a corresponding touch signal detection circuit is required to detect change information of the touch signal. However, when it intends to obtain the touch information, the synchronization of the detection time point of the touch signal and the applied touch excitation signal has a decisive function. The present invention discloses the synchronous relation between detection on the touch signal and the applied touch excitation signal during touch detection.

### BRIEF DESCRIPTION OF THE DRAWINGS

The present invention will become more fully understood from the detailed description given herein below for illustration only, and thus are not limitative of the present invention, and wherein:
FIG. 1 is a structural view of a conventional TFT-LCD display;
FIG. 2 is a schematic structural view of a display sub-pixel of a TFT-LCD;
FIG. 3 is a sequence diagram of normal display driving of a TFT-LCD;
FIG. 4 is a structural view of a touch display of a TFT-LCD display;
FIG. 5 is a sequence diagram of elements of a time-division multiplex display screen;
FIG. 6 is an oscillogram of a touch excitation signal in a first embodiment;
FIG. 7 is an oscillogram of a touch excitation signal in a second embodiment;
FIG. 8 is an oscillogram of a touch excitation signal in a third embodiment;
FIG. 9 is an oscillogram of a touch excitation signal in a fourth embodiment;
FIG. 10 is an oscillogram of a touch excitation signal in a fifth embodiment;
FIG. 11 is an oscillogram of a touch excitation signal in a sixth embodiment;
FIG. 12 is a sequence diagram of electrodes of a time-division multiplex display screen in a seventh embodiment and an eighth embodiment;
FIG. 13 is an oscillogram of a touch excitation signal in the seventh embodiment and the eighth embodiment;
FIG. 14 is a view showing arrangement of positive liquid crystal molecules under external electric field;
FIG. 15 is a view showing arrangement of negative liquid crystal molecules under external electric field;
FIG. 16 is a sequence diagram of electrodes of a time-division multiplex display screen in a ninth embodiment;
FIG. 17 is a sequence diagram of electrodes of a time-division multiplex display screen in a tenth embodiment;
FIG. 18 is an equivalent circuit diagram when a finger touches a display screen;
FIG. 19 is a curve chart of a leakage current Δi of a touch signal generated by touching, and the leakage current Δi changes along with the frequency;
FIG. 20 is an equivalent circuit diagram when a finger touches a display screen as COM electrodes are disposed on an upper substrate glass;
FIG. 21 is an oscillogram of touch signals of a touch excitation source and a touch signal sampling point when the touch excitation signal is a square wave;
FIGs. 22a, 22b, and 22c are schematic views of a whole synchronization process of the touch detection when the touch excitation signal is a square wave;
FIG. 23 is an oscillogram of touch signals of a touch excitation source and a touch signal sampling point when the touch excitation signal is a sine wave;
FIGs. 24a, 24b, and 24c are schematic views of a whole synchronization process of the touch detection when the touch excitation signal is a sine wave;
FIG. 25 is a structural view of a touch signal detection circuit in an instantaneous value measurement method;
FIG. 26 is a structural view of a touch signal detection circuit in an instantaneous value measurement method;
FIG. 27 is a structural view of a touch signal detection circuit in an instantaneous value measurement method;
FIG. 28 is a structural view of a touch signal detection circuit in an effective value measurement method;
FIG. 29 is a structural view of a touch signal detection circuit in an effective value measurement method;
FIG. 30 is a structural view of a touch signal detection circuit in an effective value measurement method;
FIG. 31 shows time features of touch signals at touch signal sampling points when the touch excitation signal is a square wave;
FIG. 32 is a structural view of a touch signal detection circuit in a time feature measurement method;
FIG. 33 is a structural view of a touch signal detection circuit in a time feature measurement method;
FIG. 34 is a structural view of a touch signal detection circuit in a phase shift measurement method;
FIG. 35 is a structural view of a touch signal detection circuit in a phase shift measurement method;
FIG. 36 is a schematic view of a detection sequence in a single-channel sequential scan touch detection mode;
FIG. 37 is a schematic view of a detection sequence in a single-channel interval scan touch detection mode;
FIG. 38 is a schematic view of a detection sequence in a single-channel rough scan and fine scan touch detection mode;
FIG. 39 is a schematic view of a detection sequence in a multi-channel sequential scan touch detection mode;
FIG. 40 is a schematic view of a detection sequence in a multi-channel interval scan touch detection mode; and
FIG. 41 is a schematic view of a detection sequence in a multi-channel rough scan and fine scan touch detection mode.

### DETAILED DESCRIPTION OF THE INVENTION

The present invention is adapted to flat panel displays (FPDs) having row electrodes and column electrodes, such as LCDs, OLEDs, AM OLEDs, PDPs, nanotube displays, and e-papers.

The specification of the present invention is illustrated by taking a typical representative of active LCDs, a thin film transistor LCD (TFT-LCD), as an object.

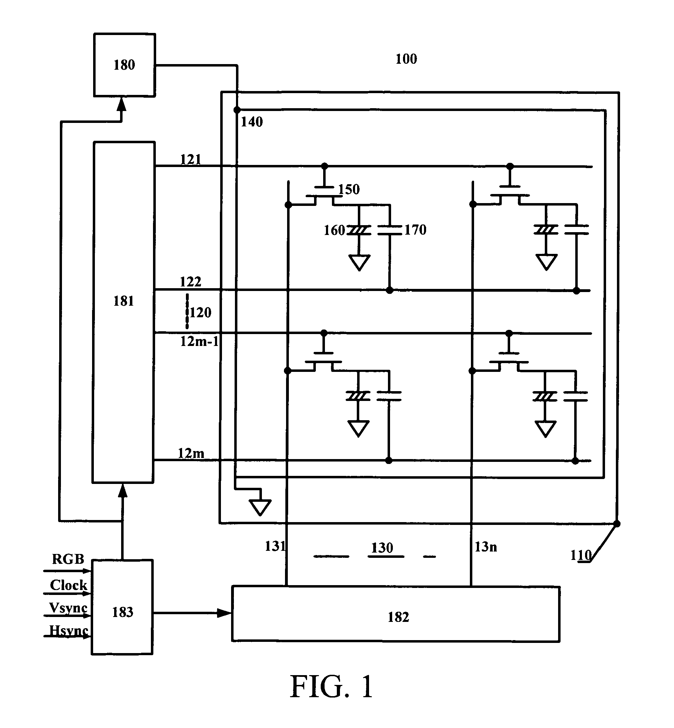

The TFT-LCD is a typical representative of active matrix LCDs (AM LCDs), and takes a TFT on a substrate thereof as a switch device. A typical structure of a TFT-LCD is shown in FIG. 1. 110 indicates a TFT liquid crystal screen. 120 indicates a horizontal scan row electrode of the liquid crystal screen, and 121, 122, ..., 12m-1, 12m indicate scan electrode lines (row electrode lines). 130 indicates a vertical data column electrode of the liquid crystal screen, and 131, ..., 13n indicate data electrode lines (column electrode lines). 140 indicates a common electrode (COM electrode), and a potential connected to the COM electrode is considered as a reference potential of liquid crystal display pixels. 150 indicates a TFT on the liquid crystal screen, which has a gate connected to the horizontal scan line, a source connected to the vertical data line, and a drain connected to a display pixel electrode. 160 indicates a liquid crystal molecular box corresponding to the display pixel, which is electrically equivalent to a capacitor, and the capacitor is generally defined as CLC. 170 indicates a capacitance storage (Cs) used for storing information of display pixels. 180 indicates a voltage source of the common electrode, which is responsible for generating a common electrode reference voltage (Vcom Reference). 181 indicates a gate driver of the TFT-LCD for driving the horizontal scan line. 182 indicates a source driver of the TFT-LCD for driving the vertical data line. 183 indicates a timing controller, which is used to receive RGB data, a clock signal Clock, a horizontal synchronization signal Hsync, and a vertical synchronization signal Vsync from an image signal processing chip and convert the signals, so as to control the source driver and the gate driver to work in cooperation.

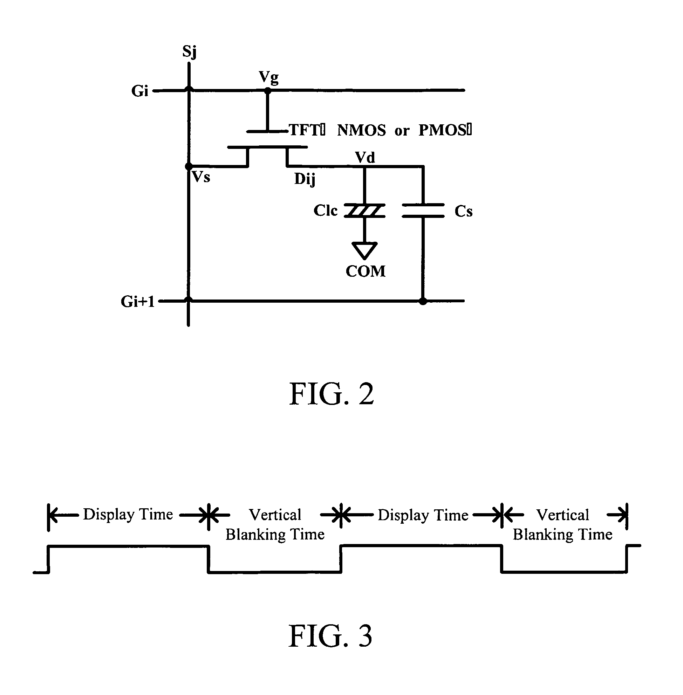

A pixel is generally composed of three sub-pixels displaying three primary colors, red, green, and blue. A schematic structural view of a display sub-pixel is shown in FIG. 2. Gi represents a horizontal row scan electrode line, which is also referred to as a row driving electrode lien or gate driving electrode line, and a potential on the Gi is Vg. Sj represents a vertical column data electrode line, which is also referred to as a column driving electrode line or source driving electrode line, and a potential on the Sj is Vs. Dij represents a terminal of the TFT that is connected to the display pixel, and is referred to as a drain, and a potential on the Dij is Vd, which is also referred to as a pixel potential. Each display pixel is disposed with a semiconductor switch device, that is, a TFT, and directly controls gating to perform display scanning through pulse, and thus each pixel is relatively independent. A voltage between the gate and the source of the TFT is Vgs, and a voltage between the gate and the drain of the TFT is Vgd. Two types of TFT exist, that is, NMOS type TFT and PMOS type TFT. Currently, most TFTs used in the TFT-LCD are made of an amorphous silicon (a-Si) process, and have a gate insulation layer being SiNx that can easily capture positive charges. If it intends to form trench in the a-Si semiconductor layer, the positive charges in the SiNx can be used for attracting electrons so as to form the trench, and thus TFTs using the a-Si process are mostly NMOS type TFTs. The content of the specification is illustrated by using an NMOS type TFT as a representative, and a PMOS type TFT follows the similar principle, so it is not described separately.

A timing diagram of normal display driving of a TFT-LCD is shown in FIG. 3. In a display time, the display driving circuit performs sequential scanning display on the row electrodes, and the column electrodes and the COM electrode output corresponding display signals accordingly, so that the display screen is in a display state. A vertical blanking time exist between every two display times, and in the vertical blanking time, the display screen does not perform the display driving, the display driving circuit stops scanning the row electrode and outputs a non-selection signal of TFT to all the row electrodes. The column electrodes and the COM electrode keep the original output state or output a certain preset output signal, and the TFT is in an off state. In the present invention, the technical solution of time-division multiplexing the electrodes of the display screen uses the vertical blanking time as a time in which the electrodes of the display screen are multiplexed as detection electrodes.

A touch control circuit controls the display driving circuit to work in cooperation with the touch control circuit, so as to enable the electrodes of the display screen to be connected to the display driving circuit to transmit display driving signals or to be connected to the touch control circuit to transmit touch signals, and thus the display driving and the touch detection time-division multiplex the electrodes of the display screen. In the display time, the electrodes of the display screen are connected to the display driving circuit to transmit the display driving signals, and the display screen is in the display state. In a touch detection time, the electrodes of the display screen are connected to the touch control circuit to transmit the touch signals, changes of the touch signals flowing through the row electrode lines and the column electrode lines are detected respectively, and the row electrode line and column electrode line having a change of the touch signal reaching a certain set condition are considered as touched electrode lines. The position of the touched point is determined according to a detected intersection of the touched row electrode line and the touched column electrode line.

Sixteenth to nineteenth embodiments of the present invention disclose related structures of a touch signal detection circuit.

In addition, first to sixth embodiments of the present invention are examples of selecting reasonable solutions of touch excitation signals to avoid the touch excitation signal from influencing the display effect, seventh to tenth embodiments of the present invention provide several solutions of avoiding the display from influence touch control, eleventh to thirteenth embodiments of the present invention disclose selection requirements of the frequency of the touch excitation signal, fourteenth and fifteenth embodiments of the present invention disclose synchronous relations between performing detection on the touch signal and the applied touch excitation signal during touch detection, and twentieth to twenty third embodiments of the present invention disclose several types of single-channel and multi-channel touch detection scanning modes and sequences. The embodiments are improvements to the touch control circuit in other aspects, and whether they are adopted does not influence the implementation of the present invention as well as the protection scope of the present invention.

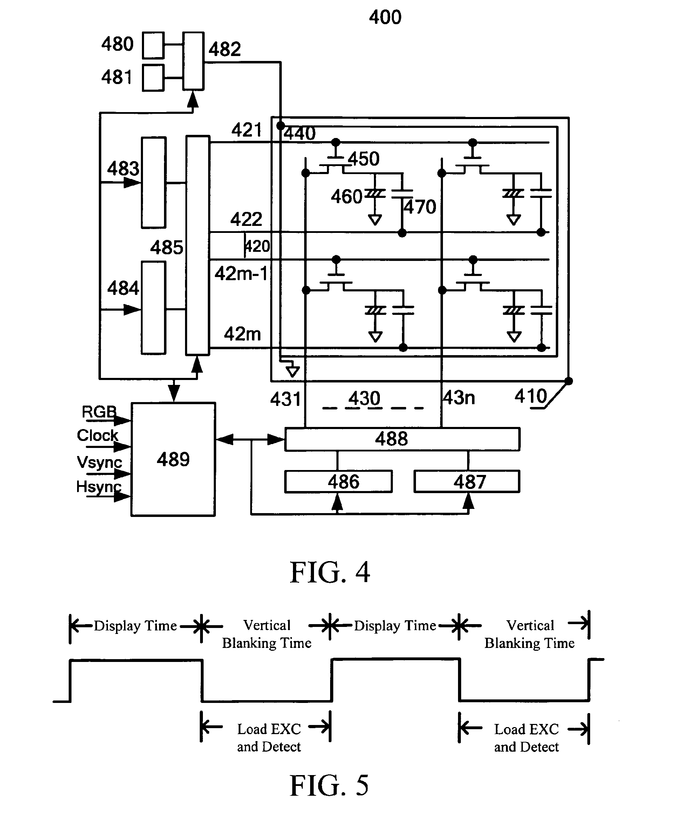

Referring to FIG. 4, an electrical connection relation of a touch display 400 having a TFT-LCD serving as a display screen is shown. The touch display 400 includes a TFT-LCD display screen 410; a horizontal scan row electrode 420 of the TFT-LCD display screen, having row electrode lines 421, ..., 42m; a vertical data column electrode 430 of the TFT-LCD display screen, having column electrode lines 431, ..., 43n; a common electrode layer (COM electrode) 440 of the TFT-LCD display screen; a TFT 450 on the TFT-LCD display screen, having a gate connected to the horizontal scan row electrode line, a source connected to the vertical data column electrode line, and a drain connected to a pixel electrode; a liquid crystal box 460 corresponding to display pixels, which is electrically equivalent to a capacitor being defined as CLC; a capacitance storage (Cs) 470 for storing display information of the pixel; a display driving circuit 480 of the COM electrode, a touch excitation source 481 used by the COM electrode in the touch detection state, and a COM signal gate output circuit 485 of the COM electrode; a display scan driving circuit 483 of the row electrode, a touch control circuit (having a touch excitation source and a touch signal detection circuit) 484 of the row electrode, and a row signal gate output circuit 485 of the row electrode; a display data driving circuit 486 of the column electrode, a touch control circuit (having a touch excitation source and a touch signal detection circuit) 487 of the column electrode, and a column signal gate output circuit 488 of the column electrode; and a timing controller 489. The display scan driving circuit 483 and the touch control circuit 484 are connected to the row electrode 420 through the row signal gate output circuit 485; the display data driving circuit 486 and the touch control circuit 487 are connected to the column electrode 430 through the column signal gate output circuit 488; and the COM display driving circuit 480 and the touch excitation source 481 are connected to the COM electrode 440 through the COM signal gate output circuit 482.

The timing controller 489 receives RGB data, a clock signal Clock, a horizontal synchronization signal Hsync, and a vertical synchronization signal Vsync from an image signal processing chip, and controls the row display driving circuit 483 connected to the gate, the column display driving circuit 486 connected to the source, and the COM display driving circuit 480 connected to the common electrode to work in cooperation; controls the row touch control circuit 484 connected to the source, the column touch control circuit 487 connected to the gate, and the COM touch excitation source 481 connected to the common electrode to work in cooperation; and makes the row gate circuit 483, the column gate circuit 488, and the COM signal gate output circuit 482 in the touch display to enable the electrodes of the display screen to be communicated with the display driving circuit to transmit display driving signals or to be communicated with the touch control circuit to transmit touch signals, and thus the display driving and the touch detection time-division multiplex the electrodes of the display screen.

In the display time, the row gate circuit 485, the column gate circuit 488, and the COM signal gate output circuit 482 in the touch display 400 enable the row electrode 420, the column electrode 430, and the COM electrode 440 of the display screen to be communicated with the row display driving circuit 483, the column display driving circuit 486, and the COM display driving circuit 480 respectively, so as to transmit the display driving signals, and thus the display screen 410 is in a display state.

In the touch detection time, the row gate circuit 484, the column gate circuit 488, and the COM signal gate output circuit 482 in the touch display 400 enable the row electrode 420, the column electrode 430, and the COM electrode 440 of the display screen to be communicated with the row touch control circuit 484, the column touch control circuit 487, and the COM touch excitation source 481 respectively, so as to transmit touch signals, and changes of the touch signals flowing through the row electrode lines and the column electrode lines are detected respectively, such that the row electrodes and the column electrodes of the display screen are switched to serve as touch sensing electrodes. The row electrode lines and the column electrode lines having the changes of the touch signals flowing therethrough reaching a certain set condition are detected by the row touch control circuit 484 and the column touch control circuit 487 as touched electrode lines. The position of the touched point on the display screen 410 is determined according to a detected intersection of the touched row electrode line and the touched column electrode line.

FIG. 4 is a schematic view of the typical structure of a touch display, and the following descriptions of the embodiments are all based on the structure.

### First Embodiment

FIG. 5 is a timing diagram of a time-division multiplexing solution of electrodes of a display screen in the touch display 400 as shown in FIG. 4. The vertical blanking time between every two display frames is considered as a touch detection time, and in this time, the electrodes of the display screen are switched to serve as touch sensing electrodes, touch excitation signals are applied to the electrodes of the display screen, and changes of the touch signals on the electrodes of the display screen are detected.

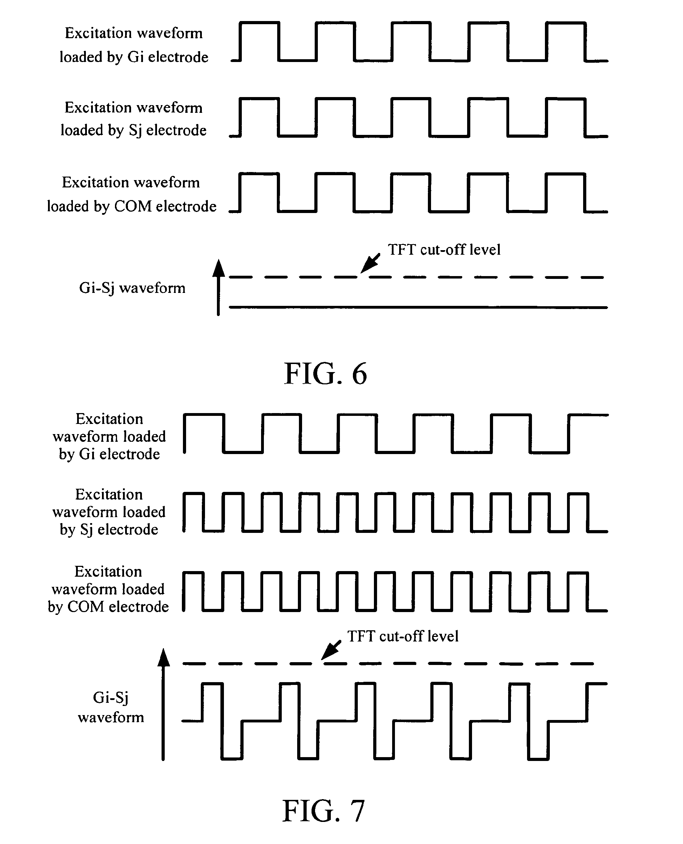

The touch excitation source is a square wave signal source with or without a DC background value. During the touch detection, touch excitation signals as shown in FIG. 6 are respectively applied to three electrodes, namely, Gi, Sj, and COM, of the TFT as shown in FIG. 2, and the three touch excitation signals are all square waves with or without DC background values, and have the same frequencies and phases. When the electrodes of the display screen are switched from the display state to the touch detection state, first, an instant potential difference Vgs=Vg-Vs between the touch excitation signals applied to the electrode Gi and the electrode Sj is made to be lower than a cut-off voltage enabling the TFT in an off state; and then, suitable touch excitation signals are applied to the COM electrode and the electrode Gi, such that average values of the pixel electrode potential Vd and the COM electrode potential Vcom all keep unchanged, and the pixel potential Vd satisfies the requirement that an instant potential difference Vgd=Vg-Vd is lower than the cut-off voltage enabling the TFT in the off state. Therefore, it is ensured that the Vgs and the Vgd are all lower than the cut-off voltage enabling the TFT in the off state, thus ensuring that the TFT can be effectively cut off in the touch detection state, so as to maintain the voltage of the display pixels, and avoid the display effect from being influenced by the touch detection.

The touch excitation sources are selected to be square wave signal sources with or without DC background values, and the square wave signal sources having the same frequencies, phases, and jump amplitudes, such that differences between the excitation signals applied to the three electrodes Gi, Sj, and COM of the TFT are constant DC levels. In fact, desired detection effect may be obtained through a detection circuit having a simple structure during the touch detection, and the generation of the signal sources is very convenient, thus having a high practical value.

### Second Embodiment

This embodiment is different from the first embodiment in that the three applied touch excitation signal (see FIG. 7) have different frequencies.

### Third Embodiment

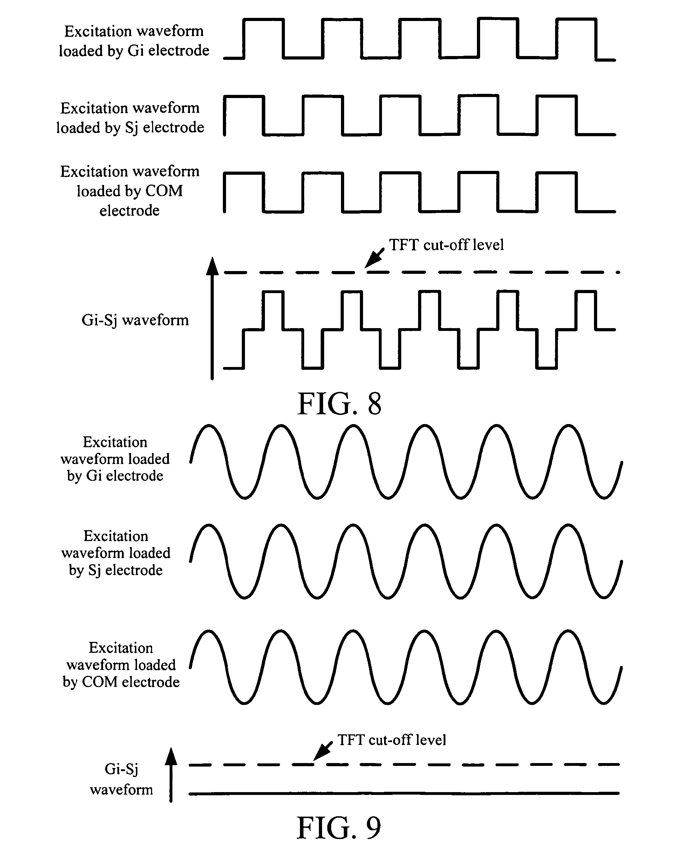

This embodiment is different from the first and the second embodiments in that the three applied touch excitation signals are all square waves with or without DC background values, and having the same frequencies and different phases, as shown in FIG. 8.

### Fourth Embodiment

This embodiment is different from the first to the third embodiments in that, during the touch detection, touch excitation signals as shown in FIG. 9 are applied to the three electrodes Gi, Sj, and COM of the TFT as shown in FIG 2 respectively, the applied three touch excitation signals are all sine waves with or without DC background values (it should be noted that in the first to the third embodiments, the signals are square waves instead of sine waves), having the same frequencies and phases.

### Fifth Embodiment

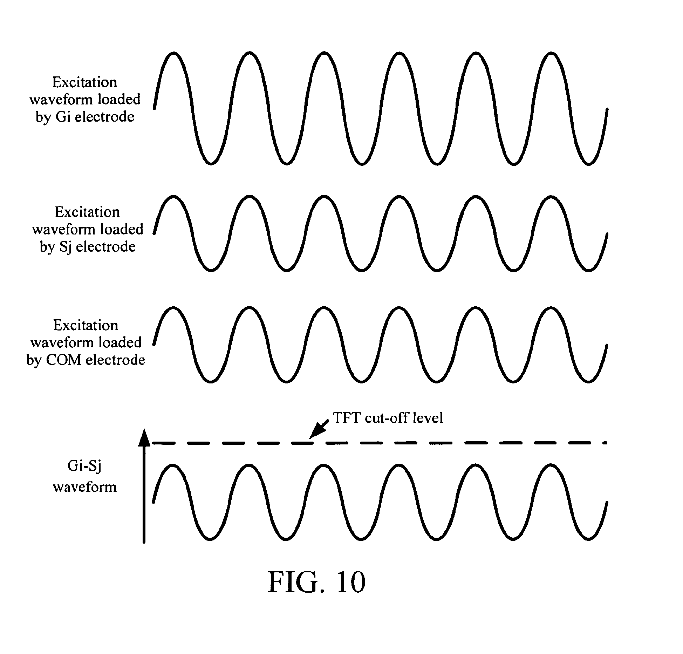

This embodiment is different from the first to the fourth embodiments in that, during the touch detection, touch excitation signals as shown in FIG. 10 are applied to the three electrodes Gi, Sj, and COM of the TFT as shown in FIG 2 respectively, the applied three touch excitation signals are all sine waves with or without DC background values having the same frequencies and phases, and having different amplitudes at AC parts of the waves.

### Sixth Embodiment

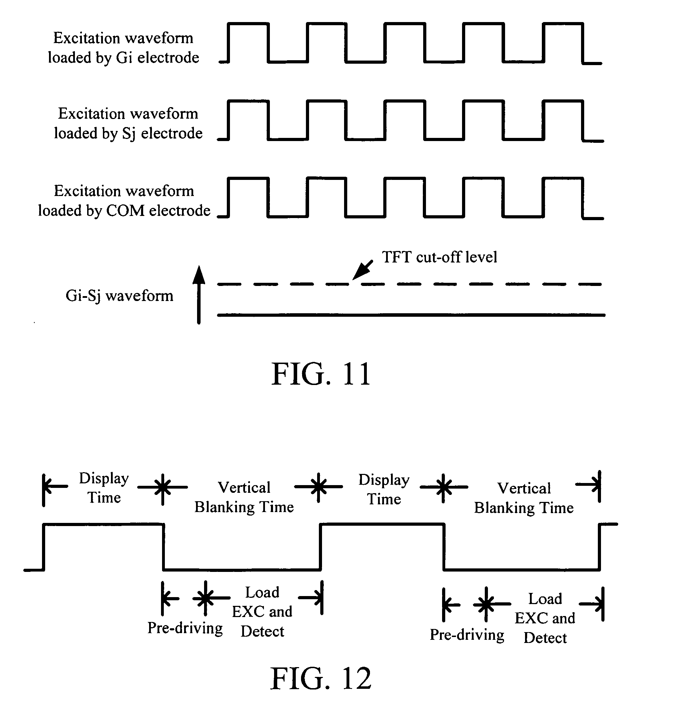

This embodiment is different from the first to the fifth embodiments in that, during the touch detection, touch excitation signals as shown in FIG. 11 are applied to the three electrodes Gi, Sj, and COM of the TFT as shown in FIG 2 respectively, this combination of the excitation signals does not keep the average values of the pixel electrode potential Vd and the COM electrode potential Vcoom unchanged, but keeps a potential difference Vd-Vcom between the two unchanged, such that the display effect can be avoided from being influenced by the touch detection.

### Seventh Embodiment

In the touch display 400 as shown in FIG. 4, the display thereof is a TFT-LCD adopting positive liquid crystal materials. The aeolotropism of the dielectric coefficient of the liquid crystal material makes distributed capacitance at each position in the liquid crystal box to change with the arrangement of the liquid crystal molecules at this position. In the TFT-LCD, the arrangement of the liquid crystal molecules at each position depends on an effective value accumulated by the driving voltage at this position. The effective values of the accumulated driving voltage vary at different times and different positions, and thus the liquid crystal molecules have different arrangements, the distributed capacitances are different, and measurement environments of performing the touch detection are different. When applying the driving voltage to the TFT-LCD, the arrangement of the liquid crystal molecules tends to the direction in parallel to the electric field under the function of the driving electric field.

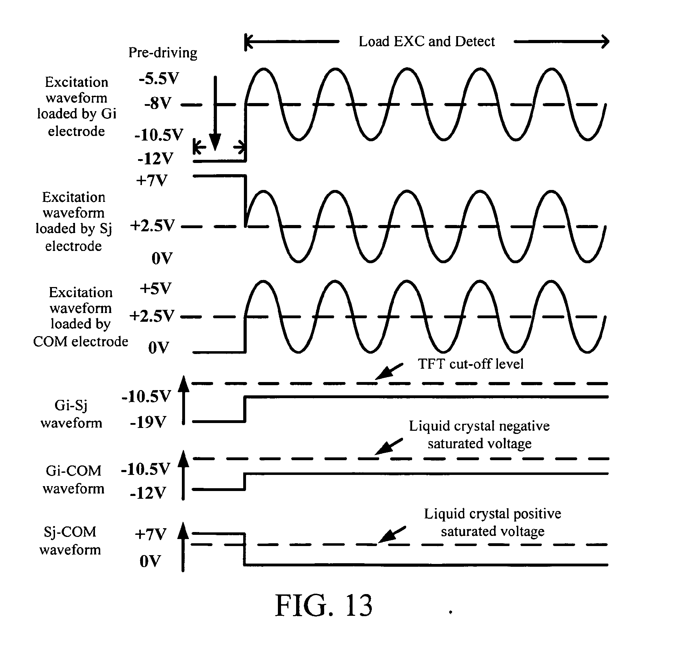

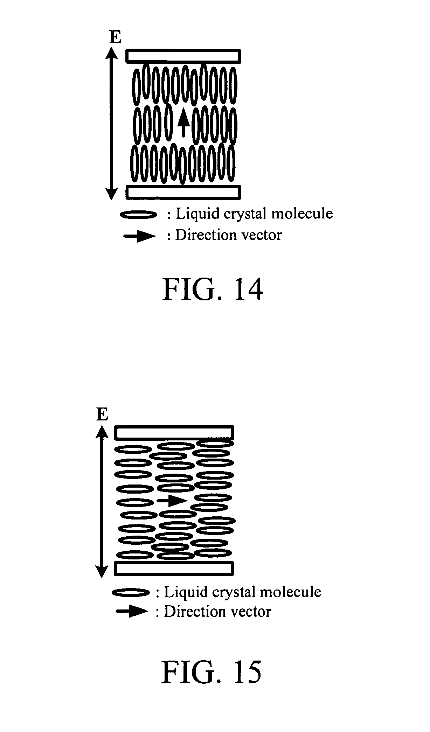

FIG. 12 is another timing diagram of a time-division multiplexing solution of display electrodes. The vertical blanking time between every two display frames is considered as a touch detection time. In this time, a saturated preset driving (pre-driving) is applied to all row electrode lines Gi and column electrode lines Sj of the display screen, signal waves on the three electrodes Gi, Sj, and COM are shown in FIG 13, and touch excitation signals are sine waves with or without DC background values. A potential difference Vgs between Gi and Sj is between -10.5 V and -17 V, which is lower than the cut-off voltage enabling the TFT in an off state, and thus avoiding from influencing the display. A potential difference Vgc between Gi and COM is between -10.5 V and -12 V, and a potential difference Vsc between Sj and COM is 5 V, which all exceed the saturated driving voltage of the liquid crystal molecules. Under the function of the applied saturated driving voltage, in the liquid crystal display screen, the arrangements of the liquid crystal molecules between the row electrode and the COM electrode and the liquid crystal molecules between the column electrode and the COM electrode are turned rapidly towards the direction in parallel to the electric field. Referring to FIG. 14, when applying an electric field E to the positive liquid crystal molecules, the arrangement of the liquid crystal molecules is in parallel with the electric field direction. Touch excitation signals are applied to the row electrode lines Gi and the column electrode lines Sj of the display screen respectively, and changes of the touch signals flowing through the row electrode lines and the column electrode lines are detected respectively. The saturated pre-driving voltage makes the arrangement of the liquid crystal molecules to be consistent, thus eliminating the change of the distributed capacitance caused by the anisotropism of the dielectric coefficient of the liquid crystal material. When detecting the changes of the touch signals flowing through the row electrode lines and the column electrode lines, the measurement environments at different times and different positions tend to be consistent, which is advantageous to the stability and consistence of touch detection results.

When applying an external electric field to the liquid crystal, the arrangement of the liquid crystal molecules as shown in FIG. 14 will not be influenced by the positive/negative direction of the electric field as the liquid crystal molecules are non-polar molecules, and thus an instant voltage on the electrodes during the pre-driving can be positive or negative, as long as the saturated driving to the liquid crystal molecules is ensured. Therefore, the pre-driving signal and the touch excitation signal applied to the same electrode of the display screen may have the same wave forms, or frequencies, and amplitudes, or even the pre-driving signal and the touch excitation signal may adopt the same signal.

### Eighth Embodiment

This embodiment is different from the seventh embodiment in that the TFT-LCD in this embodiment adopts negative liquid crystal materials, as shown in FIG. 15.

### Ninth Embodiment

The touch display 400 as shown in FIG. 4 has a display being a TFT-LCD, and since the LCD has a low response speed, when displaying a high-speed frame, ghost and tailing tend to occur. Therefore, in order to solve the problem, one solution is increasing the frame frequency of the display, and inserting a "black frame" after every display frame such that the "black frame" blocks the ghost of the pervious display content. The so-called black frame refers to that in this frame, when the TFT is turned on, a saturated driving voltage is applied to a display pixel electrode through the column electrode Sj, such that the liquid crystal molecules in the display pixel are arranged in a direction vertical to or parallel with the direction of the applied electric field. When the arrangements of the liquid crystal molecules in the display pixel are consistent, the arrangements of the liquid crystal molecules between the column electrode and the COM electrode in the liquid crystal display screen are consistent as well. The row electrode is a scan electrode, and voltages on the row electrodes have the same effective value, so when the arrangements of the liquid crystal molecules between the column electrode and the COM electrode are consistent, distributed capacitances of the row electrodes are substantially consistent.

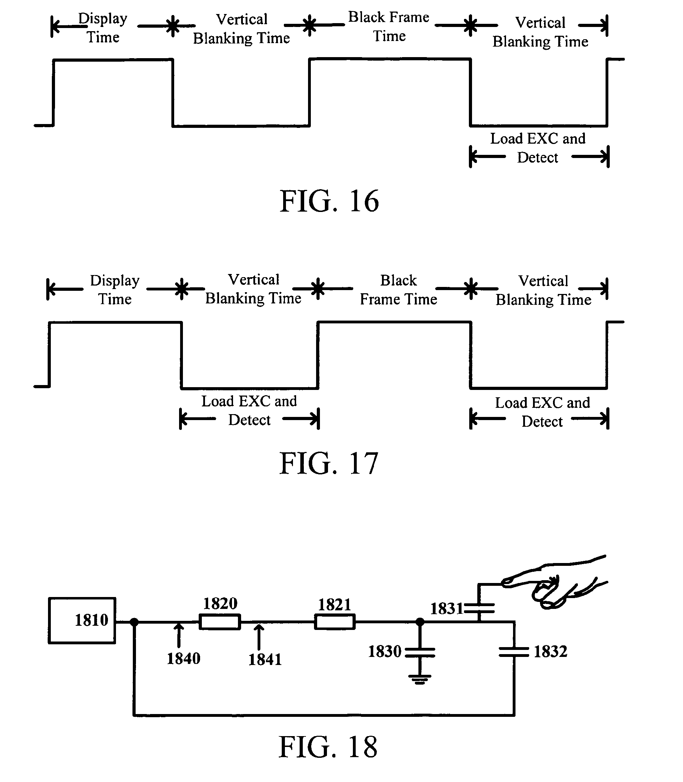

FIG. 16 is a timing diagram of a time-division multiplexing solution of display electrodes. After the black frame, touch excitation signals are applied to the row electrode lines Gi and the column electrode lines Sj of the display screen respectively, and the changes of the touch signals flowing through the row electrode lines and the column electrode lines are detected respectively. The black frame is used to make the arrangements of the liquid crystal molecules to be consistent, and thus eliminates the change of the distributed capacitance caused by the anisotropism of the dielectric coefficient of the liquid crystal material. When detecting the changes of the touch signals flowing through the row electrode lines and the column electrode lines, the measurement environments at different times and different positions tend to be consistent, which is advantageous to the stability and consistence of touch detection results.

### Tenth Embodiment

The touch display 400 as shown in FIG. 4 has a display being a TFT-LCD, and similar to the ninth embodiment, a "black frame" is inserted after every display frame, such that the "black frame" blocks the ghost of the pervious display content.

Different from the ninth embodiment, another timing diagram of a time-division multiplexing solution of display electrodes is shown in FIG 17. After the normal display frame and after the black frame, touch excitation signals are applied to the row electrode lines Gi and the column electrode lines Sj of the display screen respectively, and the changes of the touch signals flowing through the row electrode lines and the column electrode lines are detected respectively. As such, the vertical blanking time between the display frames is fully utilized, and the electrodes of the display screen are switched to serve as touch sensing electrodes in every vertical blanking time. Moreover, the black frame is used to make the arrangements of the liquid crystal molecules to be consistent, and thus eliminates the change of the distributed capacitance caused by the anisotropism of the dielectric coefficient of the liquid crystal material. Therefore, the influence of the inconsistent arrangements of the liquid crystal molecules on the detection environment is eliminated.

### Eleventh Embodiment

The touch display 400 as shown in FIG. 4 has a display being a TFT-LCD, and a glass substrate with the thickness of 0.3 mm. When a finger of a human touches the surface of the display screen, the finger forms a coupling capacitor with the electrode of the display screen through the glass sheet of the substrate, and an equivalent circuit diagram thereof is shown in FIG. 18. 1810 represents a touch excitation source for providing touch excitation signals to the electrodes of the display screen, 1820 represents a sampling resistance of a touch signal detection circuit in the touch control circuit, 1812 represents an equivalent resistance of a group of electrodes of the display screen serving as touch sensing electrodes, 1830 represents a distributed capacitance of a group of electrodes of the display screen serving as touch sensing electrodes relative to other electrodes in the display screen, 1831 represents a coupling capacitor between a finger and a group of electrodes of the display screen serving as touch sensing electrodes, and 1832 represents a capacitor between a group of electrodes of the display screen serving as touch sensing electrodes and the COM electrode.

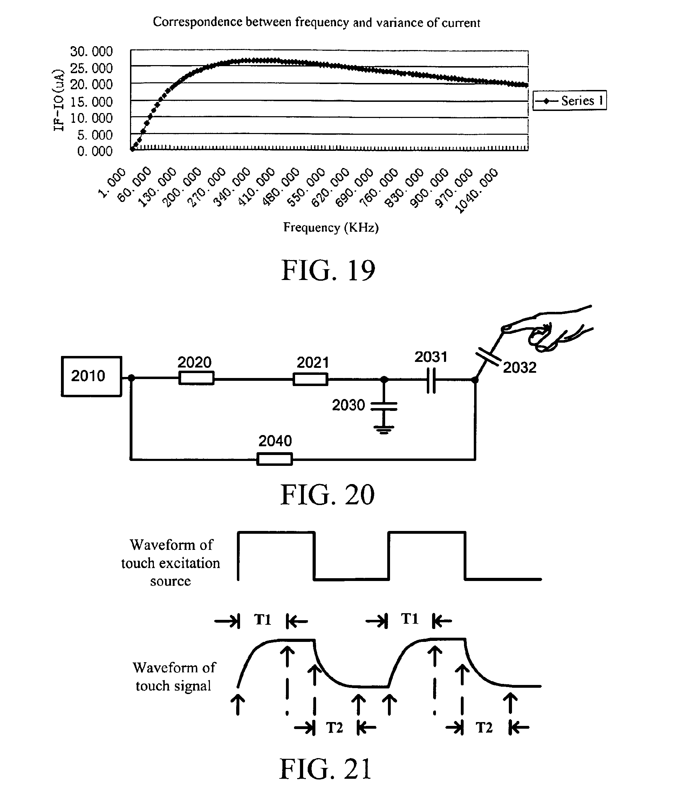

Generally speaking, when an overlapping width of the finger and a group of electrodes of the display screen serving as touch sensing electrodes is lower than 5 mm, and the substrate glass has the thickness of 0.3 mm, the coupling capacitor 1831 is approximately 10 pF. As for a common TFT-LCD, the sum of the sampling resistance 1820 and the equivalent resistance 1821 is about 30KΩ, and the touch signal on the electrodes of the display screen serving as touch sensing electrodes partially leaks to the finger from the coupling capacitor 1831. When the touch excitation source outputs a sine wave Vrms=5V, a relation between the leakage current Δi caused by the coupling capacitor 1831 and the change of the frequency of the touch excitation source is shown in FIG. 19. The frequency of the touch excitation signal is a main influence on the capacitive reactance of the coupling capacitor 1831, and different capacitive reactance may result in different magnitudes of the touch signal of the current leaked from the finger. If the frequency is too low, the capacitive reactance of the coupling capacitor 1831 is too small, and thus the touch display 400 is insensitive to the touch of the touch object, thus easily causing miss-judgment on the touch. The frequency of the touch excitation signal has a large influence on the reliability of the touch detection, especially when the display has a protection case in front of it.

It can be seen from FIG. 19 that, in practical experimental results, when the frequency of the touch excitation source is lower than 10 KHz, the leakage current Δi is small, and is hard to be distinguished as compared with the environmental noise. Therefore, the frequency of the touch excitation source setting to be 10 KHz or more is a reasonable circuit parameter of the electrodes of the display screen serving as touch sensing electrodes.

### Twelfth Embodiment

The touch display 400 as shown in FIG. 4 has a display being a TFT-LCD, and a glass substrate with the thickness of 0.3 mm. When the COM electrode of the LCD screen is disposed on an upper substrate glass facing the operator, the COM electrode forms a certain shielding effect between the row electrode and the operator and between the column electrode and the operator. A coupling capacitor exists between the finger and the COM electrode of the display screen, and a coupling capacitor exists between the COM electrode and a group of electrodes of the display screen serving as touch sensing electrodes, and an equivalent circuit diagram thereof is shown in FIG. 20. 2010 represents a touch excitation source for providing touch excitation signals to the electrodes of the display screen, 2020 represents a sampling resistor of a touch signal detection circuit in the touch control circuit, 2021 represents an equivalent resistance of a group of electrodes of the display screen serving as touch sensing electrodes, 2030 represents a distributed capacitance of a group of electrodes of the display screen serving as touch sensing electrodes relative to other electrodes in the display screen, 2031 represents a coupling capacitor between the COM electrode and a group of electrodes of the display screen serving as touch sensing electrodes, and 2032 represents a coupling capacitor between the finger and the COM electrode of the display screen, and 2040represents an equivalent resistance between the excitation source and the COM electrode.

Generally speaking, when an overlapping width of the finger and a group of electrodes of the display screen serving as touch sensing electrodes is lower than 5 mm, and the substrate glass has the thickness of 0.3 mm, the coupling capacitor 1831 is approximately 10 pF. As for a common TFT-LCD, the sum of the sampling resistance 2020 and the equivalent resistance 2021 is about 30KΩ. When a finger of a human touches the surface of the touch screen, due to the existence of the coupling capacitors 2031 and 2032, the touch signal on the electrodes of the display screen serving as the touch sensing electrodes partially flows from the coupling capacitor 2031 to the COM electrode, and then partially leaks to the finger from the coupling capacitor 2032 between the COM electrode and the finger. When a high-frequency touch excitation signal is used, the current Δi leaked from the coupling capacitors 2031 and 2032 is large, and thus the ability of the touch signal transmitting the shielding of the COM electrode is strong, such that a better touch detection ability is obtained.

### Thirteenth Embodiment

>The touch display 400 as shown in FIG. 4 has a display being a TFT-LCD. The aeolotropism of the dielectric coefficient of the liquid crystal material makes distributed capacitance at each position in the liquid crystal box to change with the arrangement of the liquid crystal molecules at this position. In the TFT-LCD, the arrangement of the liquid crystal molecules at each position depends on an effective value accumulated by the driving voltage at this position. The effective values of the accumulated driving voltage vary at different times and different positions, and thus the liquid crystal molecules have different arrangements, the distributed capacitances are different, and measurement environments of performing the touch detection are different. The aeolotropism of the dielectric coefficient of the liquid crystal material has a dispersion effect, that is, changes along with the change of the frequency, and thus, the aeolotropism of the dielectric coefficient can hardly be embodied under the function of an electric signal being 500 KHz or more.

Touch excitation signals having a frequency being 1 MHz or more are applied to the row electrode lines Gi and the column electrode lines Sj of the display screen respectively, and the changes of the touch signals flowing through the row electrode lines and the column electrode lines are detected respectively. Although the arrangements of the liquid crystal molecules at different positions of the TFT-LCD are not so consistent, due to the dispersion effect of the anisotropism of the dielectric coefficient of the liquid crystal material, the change of the distributed capacitance caused by the anisotropism of the dielectric coefficient of the liquid crystal material is still eliminated as for the touch excitation signal having the frequency being 1 MHz or more. When detecting the changes of the touch signals flowing through the row electrode lines and the column electrode lines, the measurement environments at different times and different positions tend to be consistent, which is advantageous to the stability and consistence of touch detection results.

### Fourteenth Embodiment

>The touch display 400 as shown in FIG 4 has a display being a TFT-LCD. During practical touch detection, generally, voltage signals are measured as detection objects. An equivalent circuit diagram of the measurement is shown in FIG. 18. 1810 represents a touch excitation source for providing touch excitation signals to the electrodes of the display screen, 1820 represents a sampling resistance of a touch signal detection circuit in the touch control circuit, 1812 represents an equivalent resistance of a group of electrodes of the display screen serving as touch sensing electrodes, 1830 represents a distributed capacitance of a group of electrodes of the display screen serving as touch sensing electrodes relative to other electrodes in the display screen, 1831 represents a coupling capacitor between a finger and a group of electrodes of the display screen serving as touch sensing electrodes, 1832 represents a capacitor between a group of electrodes of the display screen serving as touch sensing electrodes and the COM electrode, 1841 represents a sampling point of touch signal for measuring changes of the voltage of the touch signal, and 1840 is a detection reference point for measure changes of the voltage of the touch signal. Here, an output end of the touch excitation source 1810is selected as the reference point, but in fact, may other potential points may also be selected as reference points, such as a ground end of the touch control circuit, a positive power supply end of the touch control circuit, a negative power supply end of the touch control circuit, a point in a comparison circuit, or another group of electrode lines on the touch screen, which all can achieve desired detection effect. The touch excitation source 1810 is a square wave signal, and since 1830 and 1831 are capacitive load, charge/discharge waveforms exist in the square wave signals of the touch excitation at the two capacitors. An output waveform of the touch excitation source 1810 and a touch signal waveform of the touch signal sampling point 1841 are shown in FIG. 21.

The method of detecting the touch signal is an instantaneous value measurement method, in which a potential of the touch signal sampling point 1841 at a particular phase point is measured, and changes of the potential of the particular phase point detected at different vertical blanking times are compared, so as to obtain touch information. The particular phase point refers to a particular phase point relative to a waveform of the output end of the touch excitation source 1810. The circuit shown in FIG. 18 uses the excitation source signal as a circuit source, and on the branch where the sampling resistance locates, the two capacitors 1830 and 1831 are connected in parallel and then form an RC loop with two resistors 1820 and 1821 connected in series. In the touch detection time, the touch excitation signal is applied to the circuit as shown in FIG. 18, and the circuit performs a charging/discharging process on the capacitor. In FIG. 21, sections T1 and T2 are phase intervals suitable for sampling. At the touch signal sampling point 1841, the phase interval of T1 is a time period from the capacitor starting charging to finishing charging, and the phase interval of T2 is a time period from the capacitor starting discharging to finishing discharging.

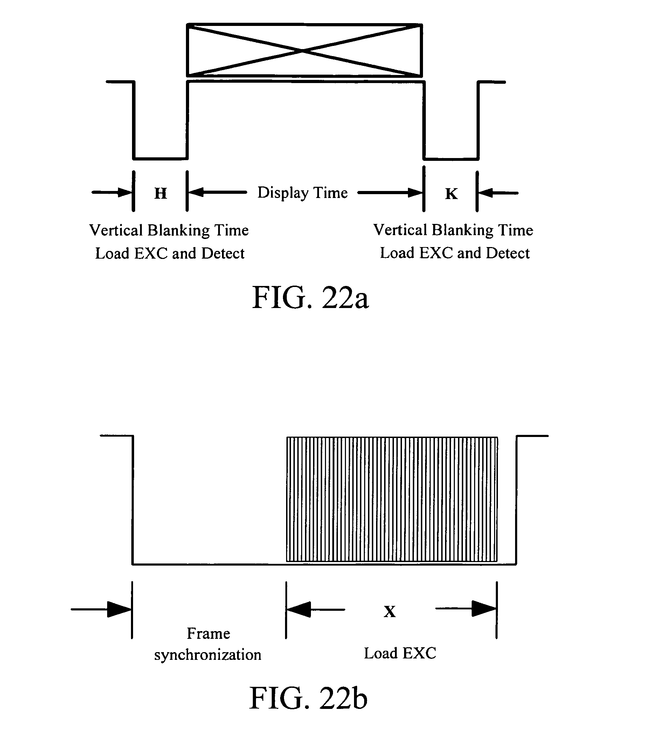

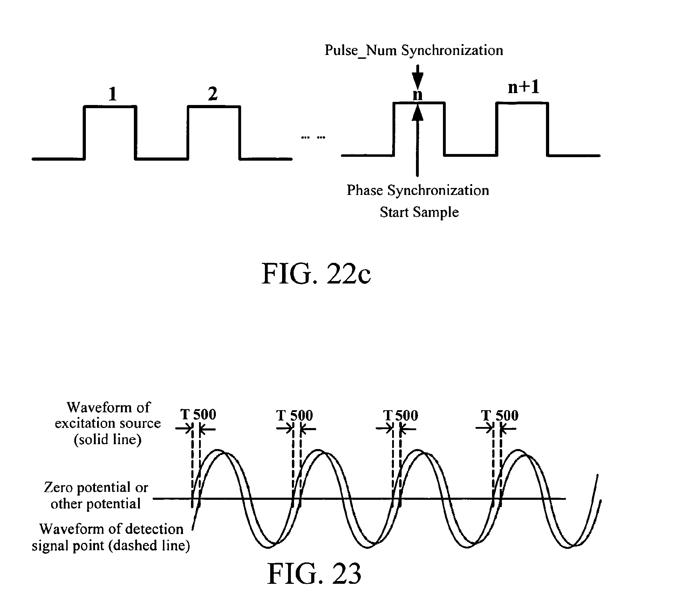

In order to ensure that every time the detection on the touch signal locates at the particular phase point of the waveform of the output end of the touch excitation source 1810, a series of strict synchronous relations should be kept. The synchronous relation is composed of three synchronous relations, that is, display frame synchronization, touch excitation pulse number synchronization, and touch excitation waveform phase synchronization. The display frame synchronization means that every time the touch excitation signal is applied at a certain fixed moment in the vertical blanking time between two display frames. The touch excitation pulse number synchronization means that the pulse number of the touch excitation signal is counted when the touch excitation signal starts to be applied to the electrodes of the display screen serving as the touch sensing electrodes, and every time the moment of obtaining the sampling data is on the pulse number of the touch excitation signal having the same sequence number. The excitation waveform phase synchronization means that every time the moment of obtaining the sampling data is at a particular phase point of the waveform of the output end of the touch excitation source, and the particular phase point is selected to be within the phase interval T1 or T2. A complete synchronization process is shown in FIGs. 22a, 22b, and 22c. FIG. 22a is a timing diagram of a time-division multiplexing of the display screen, in which the row electrodes, the column electrodes, and the COM electrode of the display screen work in cooperation to output corresponding display signals in the display time, perform display scan sequentially, and the row electrodes, the column electrodes, and the COM electrode of the display screen are multiplexed in the vertical blanking time (segments H and K) in the touch detection state, square wave touch excitation signals are applied according to detection requirements and detection is then performed. FIG. 22b is an enlarged schematic view of segments H and K (vertical blanking times) of FIG. 22a, in which square wave touch excitation signals are applied to the electrodes of the display screen at the same fixed moment in the vertical blanking times, so as to realize the frame synchronization. FIG. 22c is an enlarged schematic view of a segment X (time of loading the excitation signals and performing detection), in which in the vertical blanking time, after the frame synchronization, the touch excitation signal is applied, pulse numbers of the excitation signal are counted, and every time the sampling detection is controlled to be at the pulse number of the touch excitation signal having the same sequence number, so as to realize the synchronization of the touch excitation pulse number. Moreover, in the touch excitation signal pulse, every time the moment of obtaining the sampling data is at a particular phase of the waveform of the touch excitation output end, so as to realize the synchronization to the phase of the touch excitation waveform.

### Fifteenth Embodiment

Different from the fourteenth embodiment, in this embodiment, the touch excitation 1810 is a sine wave signal, and since the 1830 and 1831 are capacitive load, after the touch excitation source of sine wave carries the capacitive load, the waveform at the touch signal sampling point is still a sine wave having different amplitude and phase. An output waveform of the touch excitation source 1810 and a touch signal waveform of the touch signal sampling point are shown in FIG 23.

The method of detecting the touch signal is a phase shift measurement method, in which phase shifts of a particular phase point of the touch signal sampling point 1841 in different vertical blanking times are compared, so as to obtain touch information. The particular phase point refers to a particular phase point relative to a waveform of the output end of the touch excitation source 1810. The circuit shown in FIG. 18 uses the excitation source signal as a circuit source, and on the branch where the sampling resistance locates, the two capacitors 1830 and 1831 are connected in parallel and then form an RC loop with two resistors 1820 and 1821 connected in series. In the touch detection time, the touch excitation signal is applied to the circuit as shown in FIG. 18, the sine wave may have reduced amplitude and delayed phase after passing the RC loop. When the finger touches the display screen, the coupling capacitor 1831 causes the change of C in the RC loop, and a change of a time difference between the sine wave zero crossing relative to the waveform zero crossing of the output end of the touch excitation source 1810 is measured at the touch signal sampling point, so as to determine whether the touch occurs or not. The change of the phase shift of the waveform of the touch signal measured at the touch signal sampling point may also be measured at a peak value point of the sine wave or another phase point.

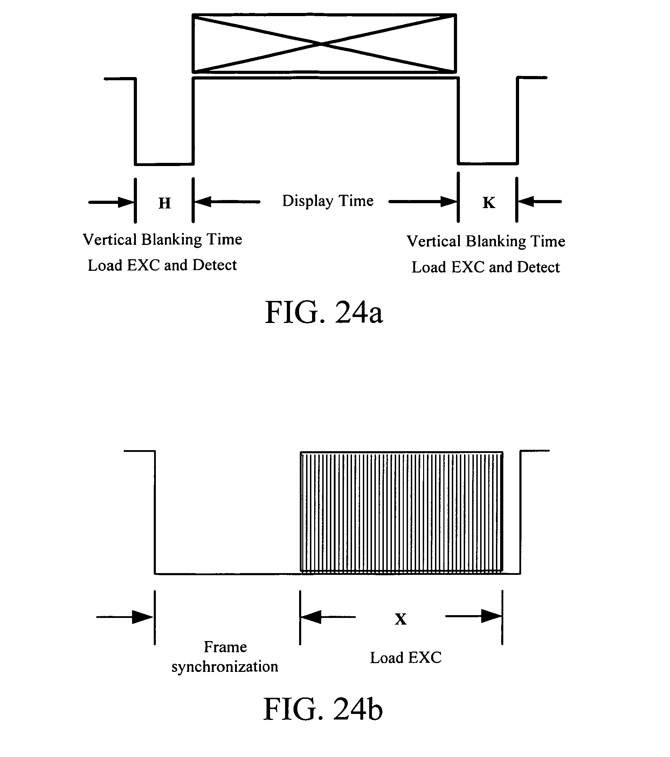

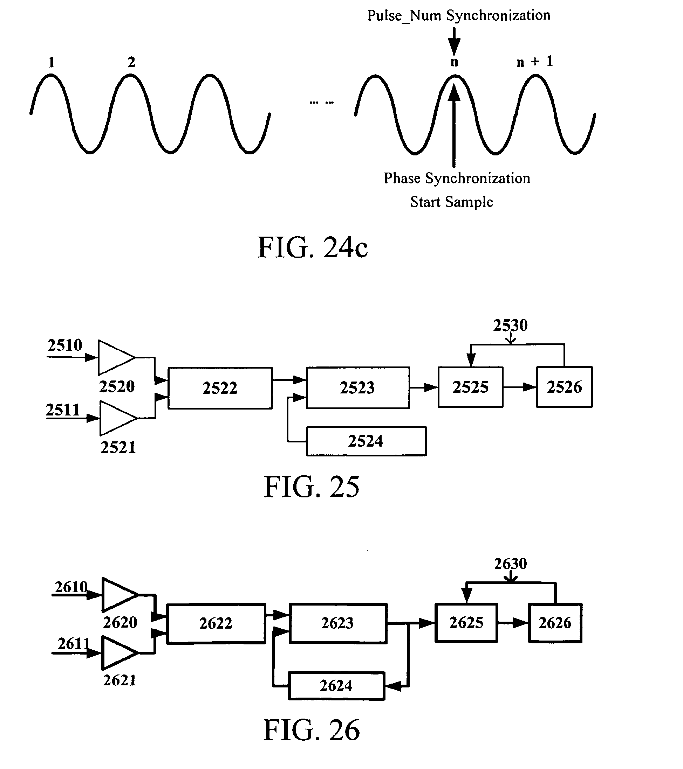

Similarly, in order to ensure that every time the detection on the touch signal locates at the particular phase point of the waveform of the output end of the touch excitation source 1810, a series of strict synchronization relations should be kept. The synchronization relation is composed of three synchronization relations, that is, display frame synchronization, touch excitation pulse number synchronization, and touch excitation waveform phase synchronization. The display frame synchronization means that every time the touch excitation signal is applied at a certain fixed moment in the vertical blanking time between two display frames. The excitation pulse number synchronization means that the pulse number of the touch excitation signal is counted when the touch excitation signal starts to be applied to the electrodes of the display screen serving as the touch sensing electrodes, and every time the moment of obtaining the sampling data is on the pulse number of the touch excitation signal having the same sequence number. The excitation waveform phase synchronization means that a particular phase point of measuring the waveform of the touch signal on the touch signal sampling point is compared with the same phase point of the waveform of the output end of the touch excitation source in term of time, and the phase shift information of the sine wave is of all phase, so only the shift of the same particular phase point is observed each time. A complete synchronization process is shown in FIGs. 24a, 24b, and 24c. FIG. 24a is a timing diagram of a time-division multiplexing of the display screen, in which the row electrodes, the column electrodes, and the COM electrode of the display screen work in cooperation to output corresponding display signals in the display time, perform display scan sequentially, and the row electrodes, the column electrodes, and the COM electrode of the display screen are multiplexed in the vertical blanking time (segments H and K) in the touch detection state, sine wave excitation signals are applied according to detection requirements and detection is then performed. FIG. 24b is an enlarged schematic view of segments H and K (vertical blanking times) of FIG 24a, in which sine wave touch excitation signals are applied to the electrodes of the display screen at the same fixed moment in the vertical blanking times, so as to realize the frame synchronization. FIG 24c is an enlarged schematic view of a segment X (time of loading the touch excitation signals and performing detection), in which in the vertical blanking time, after the frame synchronization, the sine wave touch excitation signal is applied, pulse numbers of the touch excitation signal are counted, and every time the sampling detection is controlled to be at the pulse number of the touch excitation signal having the same sequence number, so as to realize the synchronization of the excitation pulse number. Moreover, in the sine wave touch excitation signal pulse, every time the moment of obtaining the sampling data is at a particular phase of the waveform of the touch excitation output end, so as to realize the synchronization to the phase of the touch excitation waveform.

### Sixteenth Embodiment

The fourteenth and the fifteenth embodiments all adopt the instantaneous value measurement method, so as to perform touch detection on the touch display 400 in FIG. 4. In the instantaneous value measurement method, the detection is performed on the touch signal at a particular phase point in a very short time, and the method is characterized by a fast detection speed. Three circuit structures for implementing the touch signal detection in the instantaneous value measurement method are shown in FIGs. 25, 26, and 27. The touch signal detection circuit consists of a signal detection channel, a data sampling channel, and a data processing and timing control circuit. The signal detection channel has a buffer, a primary differential amplification circuit, and a secondary differential amplification circuit. The data sampling channel has an analog-to-digital converter. The data processing and timing control circuit is a central processing unit (CPU, MCU) having data operation capability and data input/output interfaces, and the central processing unit is provided with control software and data processing software.

FIG. 25 is a structural view of a touch signal detection circuit in an instantaneous value measurement method. 2510 represents a signal of a touch signal sampling point, 2511 represents a signal of a detection reference point, and the signal 2510 of the touch signal sampling point and the signal 2511 of the detection reference point are buffered by a buffer 2520 and a buffer 2521 respectively, so as to serve as input signals of a primary differential amplifier 2522. The output of the primary differential amplifier 2522 serves as one input of a secondary differential amplifier 2523. 2524 represents an adjustment voltage output, which serves as a reference potential, and is connected to the other input of the secondary differential amplifier 2523, so as to subtract a background value of the output signal of the primary differential amplification circuit. The output of the secondary differential amplifier 2523 is output to the analog-to-digital converter 2525, the analog-to-digital converter 2525 performs synchronous sampling under the control of a synchronous control signal 2530 output by the central processing unit (CPU, MPU) 2526, a conversion result of the sampling is sent to the central processing unit (CPU, MPU) 2526, and the central processing unit (CPU, MPU) 2526 performs data processing and touch determination.

FIG. 26 is a structural view of a touch signal detection circuit in an instantaneous value measurement method. 2610 represents a signal of a touch signal sampling point, 2611 represents a signal of a detection reference point, and the signal 2610 of the touch signal sampling point and the signal 2611 of the detection reference point are buffered by a buffer 2620 and a buffer 2621 respectively, so as to serve as input signals of a primary differential amplifier 2622. The output of the primary differential amplifier 2622 serves as one input of a secondary differential amplifier 2623. A feedback adjustment analog circuit 2624 takes the output of the secondary differential amplifier 2623 as a feedback input signal and adjusts an output voltage automatically, the output voltage serves as a reference potential and is connected to the other input of the secondary differential amplifier 2623, so as to subtract a background value of the output signal of the primary differential amplification circuit. The output of the secondary differential amplifier 2623 is output to the analog-to-digital converter 2625, the analog-to-digital converter 2625 performs synchronous sampling under the control of a synchronous control signal 2630 output by the central processing unit (CPU, MPU) 2626, a conversion result of the sampling is sent to the central processing unit (CPU, MPU) 2626, and the central processing unit (CPU, MPU) 2626 performs data processing and touch determination.

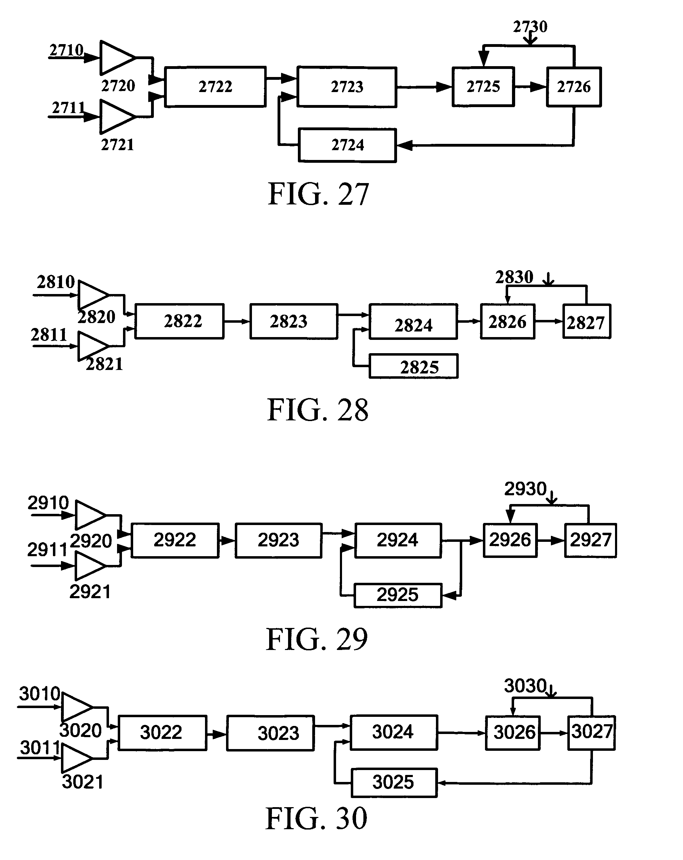

FIG. 27 is a structural view of a touch signal detection circuit in an instantaneous value measurement method. 2710 represents a signal of a touch signal sampling point, 2711 represents a signal of a detection reference point, and the signal 2710 of the touch signal sampling point and the signal 2711 of the detection reference point are buffered by a buffer 2720 and a buffer 2721 respectively, so as to serve as input signals of a primary differential amplifier 2722. The output of the primary differential amplifier 2722 serves as one input of a secondary differential amplifier 2723. A central processing unit (CPU, MPU) 2726 sends adjustment data to an analog-to-digital converter 2724 according to a touch operation result, and an output voltage of the analog-to-digital converter 2724 serves as a reference potential and is connected to the other input of the secondary differential amplifier 2723, so as to subtract a background value of the output signal of the primary differential amplification circuit. The output of the secondary differential amplifier 2723 is output to an analog-to-digital converter 2725, the analog-to-digital converter 2725 performs synchronous sampling under the control of a synchronous control signal 2730 output by the central processing unit (CPU, MPU) 2726, a conversion result of the sampling is sent to the central processing unit (CPU, MPU) 2726, and the central processing unit (CPU, MPU) 2726 performs data processing and touch determination.

The touch signal detection circuits in the instantaneous value measurement method as shown in FIGs. 25, 26, and 27 have the following differences. In the solution shown in FIG. 25, a reference potential is set to the secondary differential circuit manually, and has a basic adjustment capability to the secondary differential circuit. In the solution shown in FIG. 26, the output end signal of the secondary differential circuit is returned to the secondary differential circuit as a feedback after passing through the analog circuit, so as to serve as a reference potential, thus having an automatic tracing adjustment capability to the secondary differential circuit. In the solution shown in FIG. 27, the result obtained after the operation of the central processing unit is returned to the secondary differential circuit as a feedback to serve as a reference potential, thus having an intelligent adjustment capability to the secondary differential circuit.

Display screens having different sizes and definitions generally have the resistance of electrodes more than 2 K. At the connection points of the detection circuit and the electrode lines of the touch screen, the touch signal is split due to the input resistance of the detection circuit, and a larger input resistance of the detection circuit results in a smaller split effect on the touch signal. When the input resistance of the detection circuit is more than 2.5 times, the touch signal can reflect the touch action information, and therefore, it is required that the input resistance of the signal detection channel to the electrode line should be 5KΩ or more. For example, in FIGs. 25, 26, and 27, buffers added at the connection points of the differential amplification circuit and the electrode lines on the touch screen function to increase the input resistance of the detection circuit.

### Seventeenth Embodiment

The fourteenth and the fifteenth embodiments may also adopt an average value measurement method, so as to perform touch detection on the touch display 400 in FIG. 4. In the average value measurement method, detection is performed on the touch signal in a certain time slot, so as to obtain an average value of the touch signal to serve as the measurement result. The average value measurement method is slower than the instantaneous value measurement method, but is capable of eliminating a part of the high-frequency interference, such that the measurement data is smoother and more advantageous to the determination of the touch. Effective value is one of the average values. Three circuit structures for implementing the touch signal detection in the average value measurement method are shown in FIGs. 28, 29, and 30. The touch signal detection circuit consists of a signal detection channel, a data sampling channel, and a data processing and timing control circuit. The signal detection channel has a buffer, a primary differential amplification circuit, and a secondary differential amplification circuit. The data sampling channel has an analog-to-digital converter. The data processing and timing control circuit is a central processing unit (CPU, MCU) having data operation capability and data input/output interfaces, and the central processing unit is provided with control software and data processing software.

FIG. 28 is a structural view of a touch signal detection circuit in an average value measurement method. 2810 represents a signal of a touch signal sampling point, 2811 represents a signal of a detection reference point, and the signal 2810 of the touch signal sampling point and the signal 2811 of the detection reference point are buffered by a buffer 2820 and a buffer 2821 respectively, so as to serve as input signals of a primary differential amplification circuit 2822. The primary differential amplification circuit 2822 includes a frequency gate circuit, a gate frequency of the gate circuit is a frequency of a touch signal of an excitation source, the gate circuit gates the output of the differential amplification circuit, and the output after the gating serves as an input to an effective value converter 2823. An effective value of the effective value converter 2823 is output as an input of a secondary differential amplifier 2824. 2825 represents an adjustment voltage output, which serves as a reference potential, and is connected to the other input end of the secondary differential amplifier 2824, so as to subtract a background value of the output signal of the primary differential amplification circuit 2823. The output of the secondary differential amplifier 2824 is output to an analog-to-digital converter 2826, the analog-to-digital converter 2826 performs synchronous sampling under the control of a synchronous control signal 2830 output by a central processing unit (CPU, MPU) 2827, a conversion result of the sampling is sent to the central processing unit (CPU, MPU) 2827, and the central processing unit (CPU, MPU) 2827 performs data processing and touch determination.

FIG. 29 is a structural view of a touch signal detection circuit in an average value measurement method. 2910 represents a signal of a touch signal sampling point, 2911 represents a signal of a detection reference point, and the signal 2910 of the touch signal sampling point and the signal 2911 of the detection reference point are buffered by a buffer 2920 and a buffer 2921 respectively, so as to serve as input signals of a primary differential amplification circuit unit 2922. The primary differential amplification circuit unit 2922 includes a frequency gate circuit, a gate frequency of the gate circuit is a frequency of a touch signal of an excitation source, the gate circuit gates the output of the differential amplification circuit, and the output after the gating serves as an input to an effective value converter 2923. An effective value of the effective value converter 2923 is output as an input of a secondary differential amplifier 2924. A feedback adjustment analog circuit 2925 takes the output of the secondary differential amplifier 2924 as a feedback input signal and adjusts an output voltage automatically, the output voltage serves as a reference potential and is connected to the other input end of the secondary differential amplifier 2924, so as to subtract a background value of the output signal of the primary differential amplification circuit 2923.. The output of the secondary differential amplifier 2924 is output to an analog-to-digital converter 2926, the analog-to-digital converter 2926 performs synchronous sampling under the control of a synchronous control signal 2930 output by a central processing unit (CPU, MPU) 2927, a conversion result of the sampling is sent to the central processing unit (CPU, MPU) 2927, and the central processing unit (CPU, MPU) 2927 performs data processing and touch determination.

FIG. 30 is a structural view of a touch signal detection circuit in an average value measurement method. 3010 represents a signal of a touch signal sampling point, 3011 represents a signal of a detection reference point, and the signal 3010 of the touch signal sampling point and the signal 3011 of the detection reference point are buffered by a buffer 3020 and a buffer 3021 respectively, so as to serve as input signals of a primary differential amplification circuit 3022. The primary differential amplification circuit 3022 includes a frequency gate circuit, a gate frequency of the gate circuit is a frequency of a touch signal of an excitation source, the gate circuit gates the output of the differential amplification circuit, and the output after the gate serves as an input to an effective value converter 3023. An effective value of the effective value converter 3023 is output as an input of a secondary differential amplifier 3024. A central processing unit (CPU, MPU) 3027 sends adjustment data to an analog-to-digital converter 3025 according to a touch operation result, and an output voltage of the analog-to-digital converter 3025 serves as a reference potential and is connected to the other input of the secondary differential amplifier 3024, so as to subtract a background value of the output signal of the primary differential amplification circuit 3023.The output of the secondary differential amplifier 3024 is output to an analog-to-digital converter 3026, the analog-to-digital converter 3026 performs synchronous sampling under the control of a synchronous control signal 3030 output by a central processing unit (CPU, MPU) 3027, a conversion result of the sampling is sent to the central processing unit (CPU, MPU) 3027, and the central processing unit (CPU, MPU) 3027 performs data processing and touch determination.

The touch signal detection circuits in the average value measurement method as shown in FIGs. 28, 29, and 30 have the following differences. In the solution shown in FIG. 28, a reference potential is set to the secondary differential circuit manually, and has a basic adjustment capability to the secondary differential circuit. In the solution shown in FIG. 29, the output end signal of the secondary differential circuit is returned to the secondary differential circuit as a feedback after passing through the analog circuit, so as to serve as a reference potential, thus having an automatic tracing adjustment capability to the secondary differential circuit. In the solution shown in FIG. 30, the result obtained after the operation of the central processing unit is returned to the secondary differential circuit as a feedback to serve as a reference potential, thus having an intelligent adjustment capability to the secondary differential circuit.

Display screens having different sizes and definitions generally have the resistance of electrodes more than 2 K. At the connection points of the detection circuit and the electrode lines of the touch screen, the touch signal is split due to the input resistance of the detection circuit, and a larger input resistance of the detection circuit results in a smaller split effect on the touch signal. When the input resistance of the detection circuit is more than 2.5 times, the touch signal can reflect the touch action information, and therefore, it is required that the input resistance of the signal detection channel to the electrode line should be 5KΩ or more. For example, in FIGs. 28, 29, and 30, buffers added at the connection points of the differential amplification circuit and the electrode lines on the touch screen function to increase the input resistance of the detection circuit.

### Eighteenth Embodiment

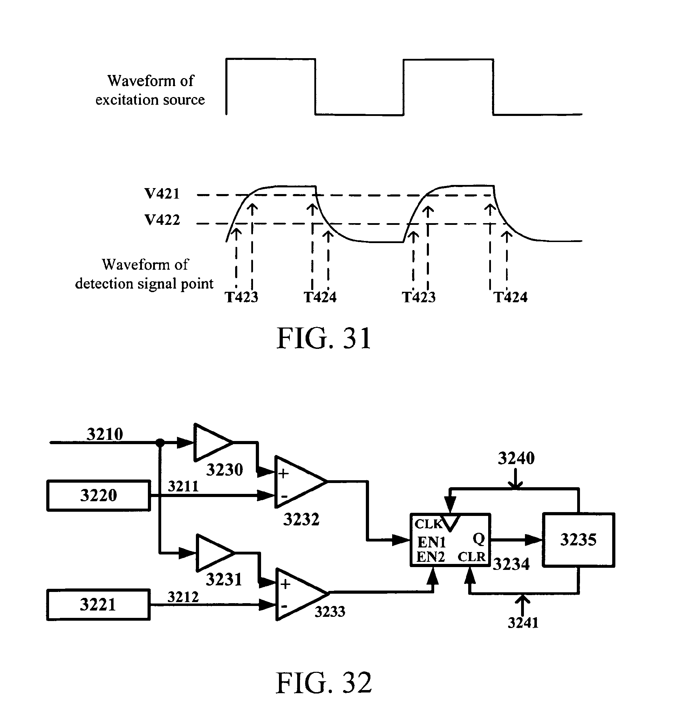

In the fourteenth embodiment, it is mentioned that the touch display 400 as shown in FIG 4 has a display being a TFT-LCD, and an equivalent circuit diagram of measurement is shown in FIG. 18. The touch excitation source 1810 is a square wave signal, and since 1830 and 1831 are capacitive load, charge/discharge waveforms exist in the square wave signals of the touch excitation at the two capacitors. The output waveform of the touch excitation source 1810 and the touch signal waveform of the touch signal sampling point 1841 are shown in FIG 21, and in order to illustrate this embodiment, reference numerals are made over again to FIG. 21, as shown in FIG. 31.

The method of detecting the touch signal is a time feature measurement method in this embodiment, changes of time interval between two given potentials at the touch signal sampling point 1841 during charging and discharging processes are measured, so as to obtain touch information. Referring to FIG. 31, a time period T423 between two given potentials V422 and V421 at the waveform of the touch signal sampling point 1841 during the charging process and a time period T424 between two given potentials V421 and V422 at the waveform of the touch signal sampling point 1841 during the discharging process are measured, so as to reflect the change of the load of the capacitor. When the finger touches the display screen, the coupling capacitor 1831 in FIG. 18 is generated, which changes the capacitance load and time constant of the circuit, and thus the time intervals T423 and T424 between two given potentials are changed. The changes of the time intervals T423 and T424 are measured so as to obtain the touch information, and the given potential V421 and V422 select two potentials of the sampling point 1841 during the charging/discharging process.

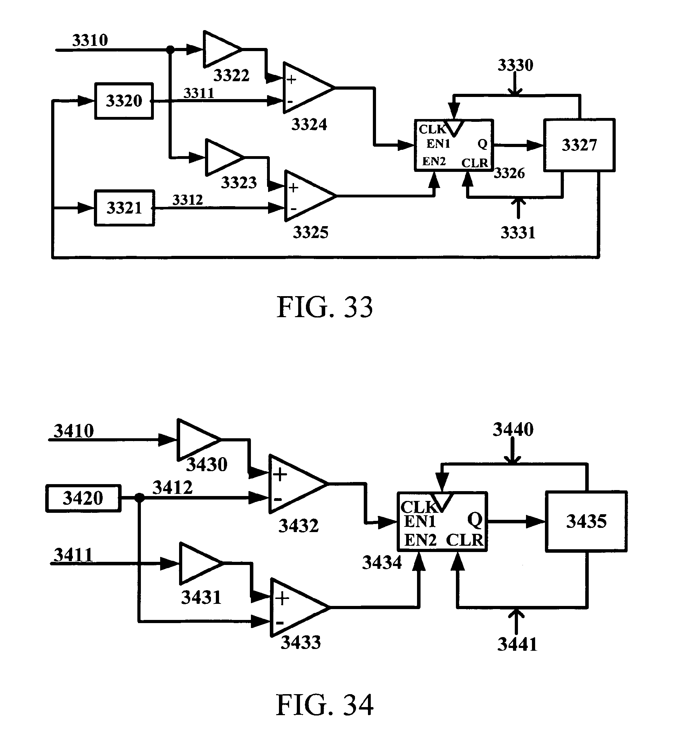

Structures of a touch signal detection circuit in the time feature measurement method are shown in FIGs. 32 and 33. The touch signal detection circuit consists of a signal detection and data sampling channel, and a data processing and timing control circuit. The signal detection and data sampling channel has a buffer, an analog-to-digital converter or voltage adjustment output unit, a comparator, and a counter. The data processing and timing control circuit is a central processing unit (CPU, MCU) having data operation capability and data input/output interfaces, and the central processing unit is provided with control software and data processing software

FIG. 32 is a structural view of a touch signal detection circuit in a time feature measurement method. 3210 represents a signal of a touch signal sampling point, 3211 represents a given potential (V421) generated by a voltage adjustment output unit 3220, and 3212 represents a given potential (V422) generated by a voltage adjustment output unit 3221. The signal 3210 of the touch signal sampling point is buffered and output by a buffer 3230, and compared with the given potential 3211 by a comparator 3232. The signal 3210 of the touch signal sample point is buffered and output by a buffer 3231, and compared with the given potential 3212 by a comparator 3233. A central processing unit (CPU, MCU) 3235 generates a counting pulse signal 3240 for a counter 3234, an output potential of the comparator 3233 serves as a counting start signal of the counter 3234, and an output potential of the comparator 3232 serves as a counting stop signal of the counter 3234. The number after the counter 3234 stops counting is read by the central processing unit (CPU, MCU) 3235, the central processing unit (CPU, MCU) 3235 sends a clear signal 3241 to clear the counter 3234 after reading the number, so as to be ready for the next counting, and the central processing unit (CPU, MCU) 3235 then performs data processing and touch determination.

FIG. 33 is a structural view of a touch signal detection circuit in a time feature measurement method. 3310 represents a signal of a touch signal sampling point. A central processing unit (CPU, MCU) 3327 outputs corresponding data to an analog-to-digital converter 3320 to output a given potential 3311 (V421), and outputs data to an analog-to-digital converter 3320 to output a given potential 3312 (V422) according to a preset procedure or history detection determination. The signal 3310 of the touch signal sampling point is buffered and output by a buffer 3322, and compared with the given potential 3311 by a comparator 3324. The signal 3310 of the touch signal sample point is buffered and output by a buffer 3323, and compared with the given potential 3312 by a comparator 3325. The central processing unit (CPU, MCU) 3327 generates a counting pulse signal 3330 for a counter 3326, an output potential of the comparator 3325 serves as a counting start signal of the counter 3326, and an output potential of the comparator 3324 serves as a counting stop signal of the counter 3326. The number after the counter 3326 stops counting is read by the central processing unit (CPU, MCU) 3327, the central processing unit (CPU, MCU) 3327 sends a clear signal 3331 to clear the counter 3326 after reading the number, so as to be ready for the next counting, and the central processing unit (CPU, MCU) 3327 then performs data processing and touch determination.

The touch signal detection circuits in the time feature measurement method as shown in FIGs. 32 and 33 have the following differences. In the solution as shown in FIG. 32, two given potentials V421 and V422 are set to the comparators manually. In the solution as shown in FIG. 33, the two given potentials V421 and V422 are set to the comparators by the central processing unit, the central processing unit outputs corresponding data to the analog-to-digital circuit through preset procedure or through operation on the previous measurement result, such that the output thereof serves as the given comparison potential, and the setting of the given comparison potential V421 and V422 has an intelligent adjustment capability.

### Nineteenth Embodiment

Different from the eighteenth embodiment, in this embodiment, the touch excitation 1810 is a sine wave signal, and since the 1830 and 1831 are capacitive load, after the touch excitation source of sine wave carries the capacitive load, the waveform at the touch signal sampling point is still a sine wave having different amplitude and phase. An output waveform of the touch excitation source 1810 and a touch signal waveform of the touch signal sampling point 1841 are shown in FIG. 23.

The method of detecting the touch signal is a phase shift measurement method in this embodiment, in which phase shifts of a particular phase point on the touch signal sampling point 1841 in different vertical blanking times are compared, so as to obtain touch information. It can be seen that the change of the phase is measured to reflect the influence of the touch capacitor, and the change of the phase can be reflected by a measurement time interval. A schematic view of detecting the time interval is shown in FIG 23, when no finger touches the display screen, due to the existence of the distributed capacitance 1830 in FIG 18, the touch signal waveform on the touch signal sampling point 1841 is detected to have a phase delay relative to the waveform of the touch excitation output end 1840, and when a finger touches the display screen, the coupling capacitor 1831 with the equivalent circuit as shown in FIG. 18 is generated, which increases the capacitive load of the circuit, and a time T500 between the zero crossing point on the touch signal sampling point 1841 and the zero crossing point of the excitation source becomes larger, thus generating a further phase shift. The touch information may be obtained through measuring the change of the time T500. According to different waveforms of the touch excitation source, the potential corresponding to the particular phase point may be a zero point or another potential point.

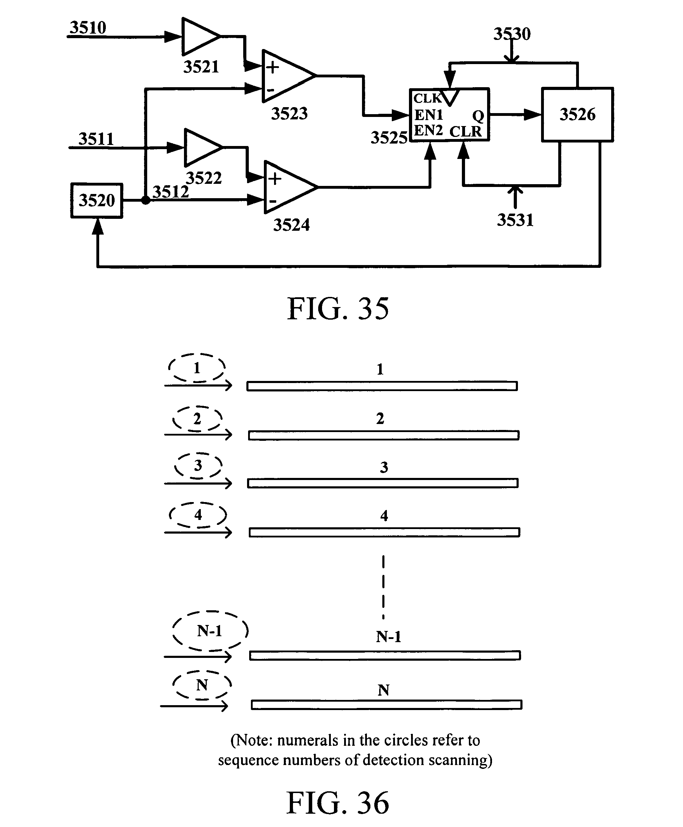

Structures of a touch signal detection circuit in the phase shift measurement method are shown in FIGs. 34 and 35. The touch signal detection circuit consists of a signal detection and data sampling channel, and a data processing and timing control circuit. The signal detection and data sampling channel has a buffer, an analog-to-digital converter or voltage adjustment output unit, a comparator, and a counter. The data processing and timing control circuit is a central processing unit (CPU, MCU) having data operation capability and data input/output interfaces, and the central processing unit is provided with control software and data processing software

FIG. 34 is a structural view of a touch signal detection circuit in a phase shift measurement method. 3410 represents a signal of a touch signal sampling point, 3411 represents a signal of a detection reference point, 3412 is a potential corresponding to a particular phase point and generated by a voltage adjustment output unit 3420. The signal 3410 of the touch signal sampling point is buffered and output by a buffer 3430, and compared with the potential 3412 corresponding to the particular phase point by a comparator 3432. The signal 3411 of the detection reference point is buffered and output by a buffer 3431, and compared with the potential 3412 corresponding to the particular phase point by a comparator 3433. A central processing unit (CPU, MCU) 3435 generates a counting pulse signal 3440 for a counter 3434, an output potential of the comparator 3433 serves as a counting start signal of a counter 3434, and an output potential of the comparator 3432 serves as a counting stop signal of the counter 3434. The number after the counter 3434 stops counting is read by the central processing unit (CPU, MCU) 3435, the central processing unit (CPU, MCU) 3435 sends a clear signal 3441 to clear the counter 3434 after reading the number, so as to be ready for the next counting, and the central processing unit (CPU, MCU) 3435 then performs data processing and touch determination.

FIG. 35 is a structural view of a touch signal detection circuit in a phase shift measurement method. 3510 represents a signal of a touch signal sampling point, and 3511 represents a signal of a detection reference point. A central processing unit (CPU, MCU) 3526 outputs corresponding data to an analog-to-digital converter 3520 according to a preset procedure or history detection determination, and a potential 3512 corresponding to a particular phase point is an output potential of the analog-to-digital converter 3520. The signal 3510 of the touch signal sampling point is buffered and output by a buffer 3521, and compared with the potential 3512 corresponding to the particular phase point by a comparator 3523. The signal 3511 of the detection reference point is buffered and output by a buffer 3522, and compared with the potential 3512 corresponding to the particular phase point by a comparator 3524. The central processing unit (CPU, MCU) 3526 generates a counting pulse signal 3530 for a counter 3525, an output potential of the comparator 3524 serves as a counting start signal of a counter 3525, and an output potential of the comparator 3523 serves as a counting stop signal of the counter 3525. The number after the counter 3525 stops counting is read by the central processing unit (CPU, MCU) 3526, the central processing unit (CPU, MCU) 3526 sends a clear signal 3531 to clear the counter 3525 after reading the number, so as to be ready for the next counting, and the central processing unit (CPU, MCU) 3526 then performs data processing and touch determination.

The touch signal detection circuits in the phase shift measurement method as shown in FIGs. 34 and 35 have the following differences. In the solution as shown in FIG. 34, the potential corresponding to the particular phase point is set to the comparators manually. In the solution as shown in FIG. 35, the potential corresponding to the particular phase point is set by the central processing unit through the analog-to-digital converter, the central processing unit takes a feedback of the analog-to-digital circuit as the potential corresponding to the particular phase point through preset procedure or through operation on the previous measurement result, such that the setting of the particular phase point has an intelligent adjustment capability.

The phase feature of the touch signal measured in this embodiment is in fact one of the time features.

### Twentieth Embodiment

The touch display 400 as shown in FIG 4 achieves the touch function through time-division multiplexing electrodes of the display screen. In the touch display 400, a part of or all of the N electrodes of the display screen are time-division multiplexed to serve as touch sensing electrode lines, so as to perform touch detection in a single-channel sequential scan detection mode. The touch signal detection circuit has a touch signal detection channel or a data sampling channel, and detects a first, a second, ..., till the last Nth touch sensing electrode lines sequentially in a scanning mode, thereby finishing a whole detection process of a detection frame, as shown in FIG 36.

This is the most normal and natural touch detection mode.

### Twenty First Embodiment

Different from the twentieth embodiment, in this embodiment, the first electrode, the (i+1)^{th} electrode, the (2i+1)^{th} electrode, ..., till the last N^{th} touch sensing electrode line in the N touch sensing electrode lines are detected through scanning in a certain given interval i, thereby finishing a whole detection process of a detection frame.

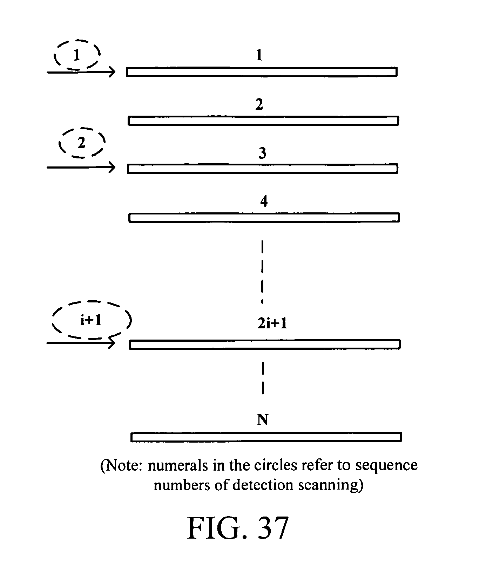

A schematic view of detection performed through scanning every other touch sensing electrode line is shown in FIG 37.

### Twenty Second Embodiment

Different from the twenty first and twenty second embodiments, in this embodiment, the touch detection is performed through a single-channel rough scan and fine scan detection mode. The touch signal detection circuit has a detection channel or a data sampling channel, the touch sensing electrode lines are divided into several blocks each having i electrode lines, one or more of the touch sensing electrode lines are selected from each block to serve as the representative touch sensing electrode of this block to perform touch detection together. In a most preferable method, all the touch sensing electrode lines in each block are connected in parallel to serve as a representative touch sensing electrode, the detection is performed on the representative touch sensing electrodes to determine the area where the touch action occurs, and then fine scan detection is performed on the area where the touch action occurs, so as to obtain more detailed touch information. This method aims to save the time spent for touch detection.

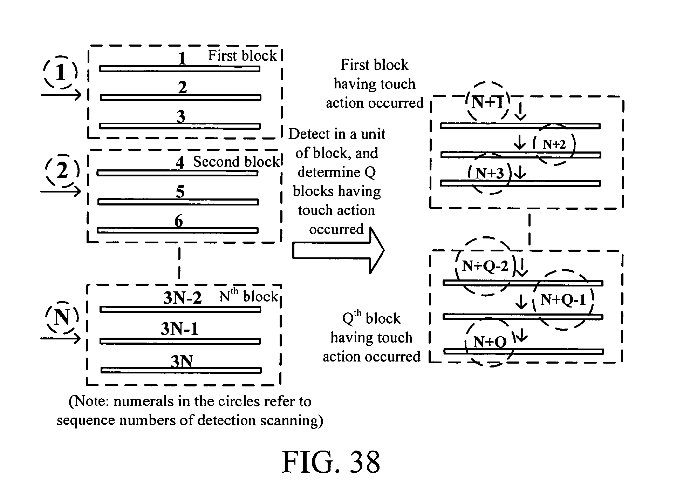

A schematic scanning view of detection in the single-channel rough scan and fine scan mode when i=3 is shown in FIG. 38

### Twenty Third Embodiment

In this embodiment, the touch detection is performed in a multi-channel sequential scan detection mode. The touch signal detection circuit has multiple touch signal detection channels and multiple data sampling channels, all the touch sensing electrode lines are divided into groups of the same number with the touch signal detection channels, and each touch signal detection channel is responsible for detecting one touch sensing electrode group.

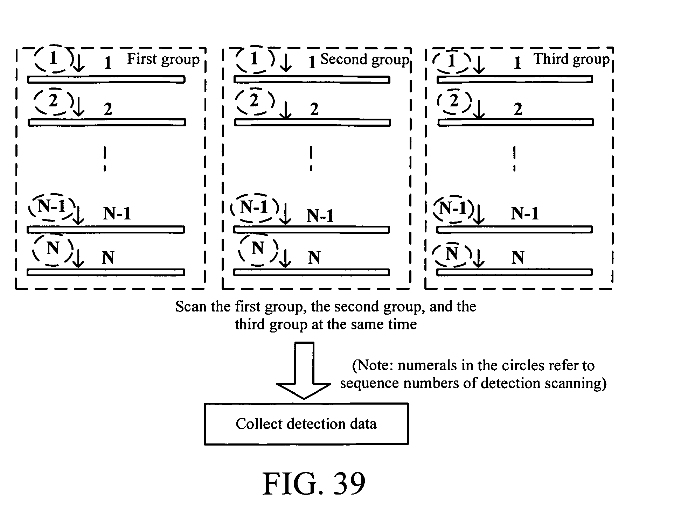

In one solution, the touch signal detection channels perform sequential scan detection on the respective groups at the same time, detection results of all the touch signal detection channels are integrated to obtain the touch information of the whole screen. FIG. 39 is a schematic view of a scanning sequence when having three touch signal detection channels.

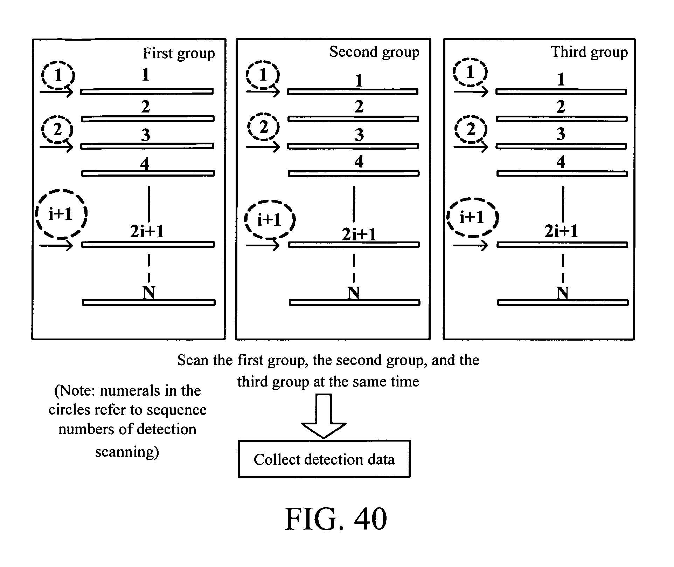

In another solution, the touch signal detection channels perform interval scan detection on the respective groups at the same time, detection results of all the touch signal detection channels are integrated to obtain the touch information of the whole screen. FIG. 40 is a schematic view of a scanning sequence when having three touch signal detection channels.

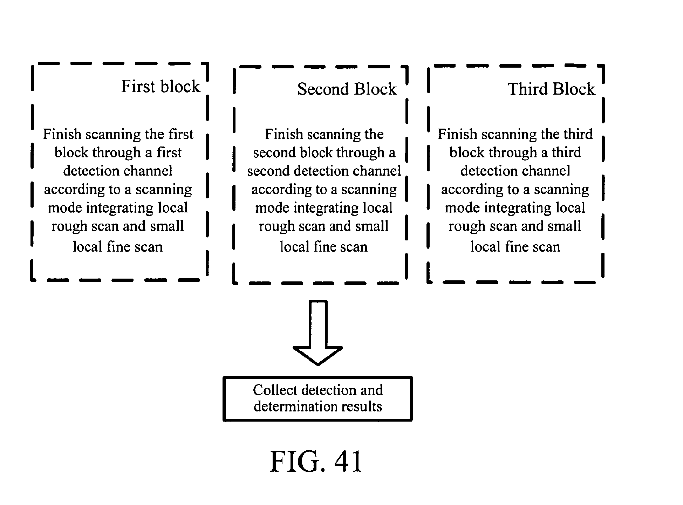

In another solution, the touch signal detection channels perform rough scan and fine scan detection on the respective groups at the same time, detection results of all the touch signal detection channels are integrated to obtain the touch information of the whole screen. FIG. 41 is a schematic view of a scanning sequence when having three touch signal detection channels.

The description on the content above is detailed illustration of the present invention through the preferred embodiments, and cannot be considered as the limitation of the present invention. Those of ordinary skill in the art can make various simple deduction or replacement without departing from the spirit of the present invention, which all fall within the protection scope of the present invention.

## Claims

1. A touch display, comprising a flat panel display (FPD), a display driving circuit, a touch control circuit, and a display/touch signal gate output circuit or a display/touch signal loading circuit enabling electrodes of the display screen to be used for display driving as well as touch detection; wherein the touch control circuit has a touch excitation source and a touch signal detection circuit; the display/touch signal gate output circuit enables the electrodes of the display screen to be communicated with the display driving circuit so as to transmit display driving signals or to be communicated with the touch control circuit so as to transmit touch signals, and the display driving and the touch detection time-division multiplex the electrodes of the display screen; the display/touch signal loading circuit enables the electrodes of the display screen to transmit display driving signals and touch signals at the same time, and the display driving and the touch detection simultaneously share the electrodes of the display screen; row electrode groups and column electrode groups are disposed on a substrate of the display screen, and the touch control circuit applies a touch signal to a certain electrode line in the row electrode group or the column electrode group and detects change of the touch signal on the electrode line, so as to detect whether the electrode is touched, wherein:
the touch control circuit samples the touch signal on a certain electrode line in a period of one display frame or a multiple of one display frame, and performs data sampling on the touch signal according to a fixed synchronous relation with the touch signal applied to the electrode line, and the fixed synchronous relation refers to that every moment of obtaining the sampling data locates at the same specific phase point of the signal wave of the touch excitation source.

2. The touch display according to claim 1, wherein:
the touch control circuit performing data sampling on the touch signal in a fixed synchronous relation refers to that the touch control circuit performs data sampling in a period of fixed sequence starting from the touch signal applied on the electrode line.

3. The touch display according to claim 1, wherein:
the touch control circuit sampling on the specific phase point refers to that when the wave of the touch signal applied on the electrode line is a square wave of another step wave, in a certain charge/discharge period that the touch signal applied on the electrode line charges a touch capacitor of a touch object, the touch control circuit samples the touch signal at a fixed moment in the time period from starting charging to finishing charging; or that the touch control circuit samples the touch signal at a fixed moment in the time period from starting discharging to finishing discharging in a certain charge/discharge period.

4. The touch display according to claim 1, wherein:
the touch control circuit performing data sampling on the touch signal in a fixed synchronous relation refers to that the touch control circuit performs data sampling in a fixed number of periods or time slots after the period of fixed sequence starting from the touch signal applied on the electrode line.

5. The touch display according to claim 4, wherein:
the touch control circuit performing data sampling on the touch signal refers to performing sampling on accumulative data or average data in a certain number of periods or time slots.

6. The touch display according to claim 1, wherein:
when the touch control circuit performs data sampling on the touch signal, at least one of a voltage signal and a current signal is sampled.

7. The touch display according to claim 6, wherein:
when the touch control circuit performs data sampling on the touch signal, at least one of an amplitude feature and a time feature of the signal is sampled.

8. The touch display according to claim 7, wherein:
the time feature of the sampled signal refers to a phase shift feature of the touch signal on the electrode line under fixed time coordinates.

9. The touch display according to claim 8, wherein:
the phase shift feature takes a phase of the touch signal on a signal output end of the touch excitation source as a comparison object.
